# EUROPÄISCHE PATENTSCHRIFT

(11) **EP 3 477 516 B1**
(45) Veröffentlichungstag und Bekanntmachung des Hinweises auf die Patenterteilung: **17.08.2022**
(21) Anmeldenummer: 18202456.2
(22) Anmeldetag: 25.10.2018
(51) Int. Cl.: G06F 21/31

(54) **STIMMBASIERTES VERFAHREN UND SYSTEM ZUR AUTHENTIFIZIERUNG**
VOICE-BASED METHOD AND SYSTEM FOR AUTHENTICATION
PROCÉDÉ VOCAL ET SYSTÈME D'AUTHENTIFICATION

(30) Priorität: 26.10.2017 DE 102017219268
(43) Veröffentlichungstag der Anmeldung: 01.05.2019
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- US-A1- 2011 178 803
- US-A1- 2016 180 078
- US-A1- 2016 372 116
- US-A1- 2017 277 868
- US-B1- 9 055 071

## Beschreibung

Die Erfindung betrifft ein Verfahren und ein System zur Authentifizierung eines Nutzers mittels eines mobilen, tragbaren Kommunikationssystems.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst.

Passwörter, die frei wählbar sind, werden oft so gewählt, dass sie kurz und leicht zu merken sind, was jedoch den Nachteil hat, dass sie schnell zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht, sie sich zu merken. Fingerabdrucksensoren haben den Nachteil, dass der Nutzer extra einen bestimmten Finger auf diesen platzieren muss. Hält er das mobile, tragbare Kommunikationssystem in der falschen Hand, kann der Fingerabdrucksensor den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Verfahren zur Nutzerauthentifizierung mittels eines Kommunikationssystems kommen überall dort zum Einsatz, wo die Identität des Nutzers überprüft wird, wobei der Identität eines registrierten Nutzers gewisse Rechte, insbesondere Zutritts- oder Zugriffsrechte, zugeordnet sind. Identität bezeichnet hier das Aufweisen von einer oder mehreren Eigenschaften, welche eine Person kennzeichnet und diese als Individuum von anderen Personen unterscheidet. Ferner bezeichnet Identität in einem weiter gefassten Sinne das Aufweisen von einer oder mehreren Eigenschaften, welche die Personen einer Gruppe gemeinsam haben und welche diese Personen als Angehörige der Gruppe von anderen Personen unterscheidet, welche nicht der Gruppe angehören. Stimmt die Identität des Nutzers mit der Identität eines registrierten Nutzers überein und besitzt dieser registrierte Nutzer die notwendigen Rechte, so wird ein Signal erzeugt, welches beispielsweise eine Vorrichtung ansteuert, den Zugriff auf einen Speicherbereich frei gibt, eine Schließvorrichtung öffnet oder ähnliches. Um sich zu authentifizieren benötigt der Nutzer für einen solchen Prozess üblicherweise ein Passwort, eine PIN oder ein vergleichbares Authentifizierungsmittel. Ein Nutzer muss sich beispielsweise gegenüber einem Bankautomaten authentifizieren, indem er seine Bankkarte mit dem Automaten verbindet und seine PIN eingibt. Ist ein unberechtigter Nutzer im Besitz der Karte und kennt die PIN, so hat der unberechtigte Nutzer vollen Zugriff auf das Konto des Besitzers der Karte. Zum Erlangen eines solchen unberechtigten Zugriffs genügt es daher bereits, dass der unberechtigte Nutzer die PIN bei der Eingabe ausspäht und die Karte in seinen Besitz bringt.

Des Weiteren sind aus dem Stand der Technik Zugangskontrollen bekannt, bei denen sich ein Nutzer authentifizieren muss, um Zugriff auf eine sicherheitskritische Vorrichtung zu erlangen. Dabei muss sich der Nutzer mittels einer PIN, einem Passwort oder einer Sicherheitskarte gegenüber der Vorrichtung authentifizieren. Diese Authentifizierungsfaktoren sind aber nicht nur leicht zu entwenden oder auszuspähen, sie haben noch einen weiteren Nachteil: Sie werden einem Nutzer einmal zugewiesen und erlauben es diesem sich jederzeit ohne Einschränkungen zu authentifizieren bzw. auf ein durch die Authentifizierungsanforderung geschütztes System oder einen Dienst zuzugreifen. Es kann jedoch Situationen geben, in welcher die Notwendigkeit besteht einem registrierten Nutzer den Zugriff auf das entsprechende System bzw. den entsprechenden Dienst vorübergehend zu verwehren.

Die US 9,055,071 B1 beschreibt ein Verfahren zum Verhindern einer Übertragung vertraulicher Informationen an Orte außerhalb eines sicheren Netzwerks durch eine Person, welche berechtigten Zugriff auf die vertraulichen Informationen besitzt. Es wird eine Clientanwendung, die auf einem Computergerät ausgeführt wird, von dem sicheren Netzwerk benötigt, damit ein Endnutzer des Computergeräts eine sichere Verbindung mit dem sicheren Netzwerk herstellen und auf Daten zugreifen kann, die in dem sicheren Netzwerk gespeichert sind. Die Client-Anwendung überwacht visuelle Hinweise in Form von Gesichtsausdrücken und Gesten, welche dem Endnutzer zugeordnet sind, verdächtige Aktivitäten des Endnutzers auf der Grundlage der visuellen Hinweise erkennen und in Reaktion auf das Erkennen verdächtiger Aktivitäten Abschwächungsmaßnahmen durchführen, um die Übertragung sensibler Informationen zu verhindern. Abschwächungsmaßnahmen umfassen eine Benachrichtigung von Personal oder ein Erfordernis einer Autorisierung, bevor Informationen an Orte außerhalb des sicheren Netzwerks gesendet werden.

Der Erfindung liegt demgegenüber die Aufgabe zugrunde, ein verbessertes Verfahren zur Authentifizierung eines Nutzers zu ermöglichen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Eine Situation, in welcher die Notwendigkeit besteht einem registrierten Nutzer den Zugriff auf ein System und/oder einen Dienst vorübergehend zu verwehren, kann beispielsweise das Bedienen von sicherheitskritischen Vorrichtungen umfassen. Die sicherheitskritische Vorrichtung sollte nur von Nutzern bedient werden, die einen bestimmten emotionalen Zustand aufweisen. Ein wütender oder aufgebrachter Nutzer beispielsweise stellt insbesondere bei Flug- bzw. Fahrzeugen eine Gefahr für die Umgebung dar, da intensive emotionale Zustände das Konzentrationsvermögen und das Urteilsvermögen eines Menschen beeinträchtigen können. Unter solchen Umständen kann es vorteilhaft sein, den emotionalen Zustand des Nutzers bei der Authentifizierung für den Zugriff auf eine solche sicherheitskritische Vorrichtung zu berücksichtigen.

Die Erfindung schlägt ein Verfahren und ein System zur Authentifikation eines Nutzers vor, welche eine Authentifizierung ohne PIN oder Passwort und unter Berücksichtigung des emotionalen Zustands des Nutzers ermöglichen. Die Grundlage der Authentifizierung ist ein individuelles intrinsisches Verhalten des Nutzers, welches durch eine natürliche Verhaltensweise des Nutzers definiert ist. Die verhaltensbasierte Authentifikation ermöglicht es dem Nutzer sich dadurch zu authentifizieren, dass er sich so verhält wie er es gewohnt ist. Der Nutzer muss sich daher kein Passwort, keine PIN, keine spezielle Geste oder ähnliche Authentifizierungsmittel merken.

Bei einer verhaltensbasierten Authentifizierung eines Nutzers wird zwischen zwei Typen von Nutzern unterschieden. Einerseits ist der in dem System registrierte Nutzer derjenige Nutzer, den das System erkennen soll. Andererseits ist der aktuelle Nutzer derjenige Nutzer, der das System aktuell bedienen bzw. benutzen möchte. Kann der aktuelle Nutzer mit dem in dem System registrierten Nutzer durch den Authentifizierungsprozess identifiziert werden, so wird dem aktuellen Nutzer der Zugriff auf das System oder Zutritt zu dem System gewährt. Stimmt der aktuelle Nutzer nicht mit dem in dem System registrierten Nutzer überein, so identifiziert das System den aktuellen Nutzer als eine andere, nicht nutzungsberechtigte Person und verweigert den Zugriff oder Zutritt. Im Folgenden wird mit "der Nutzer" der aktuelle Nutzer des Systems bezeichnet. Ist der in dem System registrierte Nutzer gemeint, ist dies explizit als "der registrierte Nutzer" gekennzeichnet.

Ein mobiles, tragbares erstes Kommunikationssystem kann ein einzelnes eigenständiges Gerät oder mehrere mechanisch und/oder kommunikativ miteinander verbundene Geräte umfassen. Ein solches mobiles, tragbares Kommunikationssystem kann zum Beispiel umfassen: ein Smartphone, ein Tablet, einen Personal Digital Assistant, einen Pager, Smart-Glasses, eine Smartwatch, ein Navigationsgerät, einen Activity Tracker, ein Gerät zur Erfassung physiologischer Daten, insbesondere physiologischer Daten wie ein Pulsmessgerät oder ein Blutdruckmessgerät. Die verhaltensbasierte Authentifizierung lässt sich von allen mobilen und tragbaren Geräten und Systemen ausführen, die in der Lage sind, elektronisch Daten zu verarbeiten und mindestens einen Sensor zur Erfassung von Daten aufweisen.

Das erste Kommunikationssystem umfasst eine Mehrzahl von Sensoren zur Erfassung von Daten. Viele mobile, tragbare Kommunikationssysteme, wie Smartphones oder Smartwatches, sind mit Sensoren ausgestattet, mit welchen sich verhaltensbasierte Daten des Nutzers erfassen lassen. Drucksensoren erfassen an geeigneten Stellen, wie beispielsweise dem Handgelenk oder der Schläfe, den Puls und den Blutdruck, an einer weiteren Stelle wird beispielsweise mittels einem Gyroskop eine nutzertypische Bewegung erfasst. Die Kombination der aktuell erfassten verhaltensbasierten Daten repräsentiert dabei einerseits eine Art "digitalen Fingerabdruck", also eine Identität des Nutzers und andererseits einen aktuellen emotionalen Zustand des Nutzers.

Einer der Sensoren umfasst ein Mikrofon zum Erfassen von stimmbasierten Daten des Nutzers. Die erfassten Daten umfassen ferner stimmunabhängige verhaltensbasierte Daten des Nutzers.

Die erfassten stimmbasierten Daten bieten die Möglichkeit den emotionalen Zustand eines Nutzers zu bestimmen. Zusätzlich können nach Ausführungsformen die stimmunabhängigen verhaltensbasierten Daten zur Bestimmung des emotionalen Zustands des Nutzers ausgewertet werden. Ein emotionaler Zustand umfasst eine oder mehrere Emotionen. Eine Emotion benennt ein Gefühl, eine Gemütsbewegung oder seelische Erregung. Ferner ist eine Emotion ein psychophysiologisches, auch psychisches Phänomen, das durch die bewusste oder unbewusste Wahrnehmung eines Ereignisses oder einer Situation ausgelöst wird. Das Wahrnehmen geht einher mit physiologischen Veränderungen, spezifischen Kognitionen, subjektivem Gefühlserleben, reaktivem Sozialverhalten, Einflüssen auf das Verhalten oder Bewegungsmuster. Beispielsweise geht ein gestresster Nutzer schneller, als ein Nutzer, der sich in einer ruhigen Stimmung befindet. Ein nervöser Nutzer ist beispielsweise ungenauer bei der Eingabe von Text und macht dabei mehr Fehler als ein glücklicher Nutzer. Ein wütender Nutzer weist beispielsweise einen höheren Blutdruck als ein entspannter Nutzer auf. Der emotionale Zustand ist dabei bezüglich einer Mehrzahl von Parametern individuell. Beispielsweise können der Ruhepuls und der Blutdruck eines jeden Menschen unterschiedlich sein.

Das erste Kommunikationssystem umfasst ferner ein Klassifikationsmodul und einen Prozessor, wobei das Klassifikationsmodul von dem Prozessor ausgeführt wird.

Das Klassifikationsmodul ist dazu konfiguriert, Daten, die in das Klassifikationsmodul eingegeben wurden, in Klassen einzuteilen und den Daten entsprechende Klassifikationen zuzuordnen. Das Klassifikationsmodul ist dazu konfiguriert, die Daten einer Identität eines registrierten Nutzers zuzuordnen oder den Nutzer als einen nicht registrierten Nutzer zu identifizieren. Ferner ist das Klassifikationsmodul dazu konfiguriert, den Daten einen emotionalen Zustand aus einer Auswahl von für die Authentifizierung zulässigen emotionalen Zuständen zuzuordnen.

In Ausführungsformen kann für eine erfolgreiche Authentifizierung ein achtsamer, gelassener oder ausgeglichener Zustand erfordert sein. Ferner kann eine erfolgreiche Authentifizierung einen emotionalen Zustand erfordern, der einem bestimmten auszuschließenden Zustand nicht entspricht. Solche Zustände können beispielsweise wütend, verwirrt, traurig, depressiv, nervös oder ängstlich umfassen.

Das Verfahren zur Authentifizierung eines Nutzers umfasst:
- Empfangen einer Authentifizierungsanfrage,
- Erfassen der Daten durch den mindestens einen Sensor,
- Eingeben der Daten in das Klassifikationsmodul und Generieren eines ersten Zwischenergebnisses und eines zweiten Zwischenergebnisses aus den Daten durch das Klassifikationsmodul,
- Generieren eines Klassifikationsergebnisses unter Verwendung des ersten Zwischenergebnisses und des zweiten Zwischenergebnisses,
- Authentifizieren des Nutzers unter Verwendung des Klassifikationsergebnisses,
- Generieren eines Authentifizierungssignals, wobei das Signal eine Information über das Ergebnis der Authentifizierung umfasst.

Die Daten werden durch die Sensoren des ersten Kommunikationssystems erfasst und in das Klassifikationsmodul eingegeben. Das Klassifikationsmodul verarbeitet die Daten zu einem ersten Zwischenergebnis und einem zweiten Zwischenergebnis.

In Ausführungsformen implementiert das Klassifikationsmodul ein Maschinenlernverfahren. Ein Maschinenlernverfahren bezeichnet ein Verfahren, mit dem das Klassifikationsmodul in der Lage ist, sich an das Verhalten des Nutzers des ersten Kommunikationssystems anzupassen. Dieses Anpassen wird trainieren des Klassifikationsmoduls genannt. Trainieren bezeichnet in diesem Sinne das Justieren und gegebenenfalls Neukonfigurieren von Vergleichsparametern, anhand derer der Nutzer korrekt identifiziert und der emotionale Zustand korrekt erkannt werden können.

Das Maschinenlernverfahren ist nicht beschränkt auf einen bestimmten Algorithmus. Gemäß Ausführungsformen der Erfindung ist das Maschinenlernverfahren ein speziell für das maschinelle Lernen entwickelter Algorithmus, wie zum Beispiel, ohne darauf beschränkt zu sein, ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Das erste Zwischenergebnis umfasst eine Zuordnung des Nutzers zu einer Identität eines registrierten Nutzers und die Angabe einer Zuordnungswahrscheinlichkeit, mit der dem Nutzer die Identität des registrierten Nutzers zugeordnet wird. Das zweite Zwischenergebnis umfasst eine Zuordnung des Nutzers zu einem emotionalen Zustand und die Angabe einer Zuordnungswahrscheinlichkeit, mit der dem Nutzer der emotionale Zustand zugeordnet wird.

Die Zuordnung einer Klassifikation wird beispielsweise anhand der Zuordnungswahrscheinlichkeit bestimmt. Die Klassifikation mit der höchsten Zuordnungswahrscheinlichkeit wird als die den Daten bzw. dem Nutzer zugeordnete Klassifikation bestimmt. Beispielsweise wird für den Nutzer ein erster emotionaler Zustand mit einer Zuordnungswahrscheinlichkeit von 45% und zweiter emotionaler Zustand mit einer Zuordnungswahrscheinlichkeit von 54% ermittelt. Das übrige Prozent teilt sich auf weitere emotionale Zustände auf. Da der zweite emotionale Zustand eine höhere Zuordnungswahrscheinlichkeit aufweist als der erste emotionale Zustand, würde dem Nutzer der zweite emotionale Zustand zugeordnet werden.

Aus dem ersten Zwischenergebnis und dem zweiten Zwischenergebnis wird das Klassifikationsergebnis generiert. Das Klassifikationsergebnis umfasst die Informationen bezüglich der vorher getätigten Zuordnungen und deren Zuordnungswahrscheinlichkeiten. Der Nutzer wird anhand des Klassifikationsergebnisses authentifiziert. Dazu müssen dem Nutzer eine Identität eines registrierten Nutzers und ein für die Authentifizierung zulässiger emotionaler Zustand zugeordnet sein. Ist eines dieser beiden Kriterien nicht erfüllt, wird der Nutzer nicht erfolgreich authentifiziert. Beispielsweise wurde der Nutzer als ein registrierter Nutzer identifiziert, befindet sich jedoch in einem unzulässigen emotionalen Zustand, beispielsweise weil er wütend ist.

In einer weiteren Ausführungsform müssen für eine erfolgreiche Authentifizierung weitere Kriterien erfüllt sein. Beispielsweise erfordert ein weiteres Kriterium einen Mindestwert für eine oder beide der Zuordnungswahrscheinlichkeiten. In einer weiteren Ausführungsform sind die Zwischenergebnisse mit einem Zeitstempel versehen. Ein weiteres Kriterium kann beispielsweise ein maximales Höchstalter der Zwischenergebnisse umfassen.

Nach Ausführungsformen umfassen die stimmbasierten Daten zumindest einen der folgenden Parameter der Stimme des Nutzers: Klangfarbe, Rhythmus, Melodie und Lautstärke. Die Klangfarbe der Stimme bezieht sich auf das Klangspektrum der einzelnen Töne. Das Klangspektrum umfasst die spezifische Kombination aus Grundton, Obertönen und Rauschanteilen. Diese Kombination kann ferner durch die zeitliche Dauer der einzelnen Bestandteile sowie der Beitrag, d.h. individuelle Lautstärke, charakterisiert sein. Die Zusammensetzung dieser Kombination kann beispielswiese mit Hilfe einer Fourier-Transformation, wie etwa einer Kurzzeit-Fourier-Transformation (STFT), analysiert werden. Dadurch lassen sich Aussagen über die Teiltöne oder/und den zeitlichen Anteil der einzelnen Bestandteile an dem Klang der Stimme gewinnen. Beispielsweise tragen die individuellen Teiltöne und Hüllkurve (Formanten) zur Klangfarbe der Stimme bei. Formanten bezeichnen charakteristische Minima und Maxima im Obertonspektrum einer akustischen Schwingung. Der Rhythmus der Stimme bzw. der Sprechrhythmus beschreibt die zeitliche Gliederung der gesprochenen Sprache, d.h. die Abfolge von betonten und unbetonten Silben und/oder kurzen und langen Silben und/oder Pausen. Dieser Rhythmus kann das Resultat einer regelmäßigen Wiederkehr von Bewegungen der Atemmuskulatur sein. Aus diesen Bewegungen ergibt sich beispielswiese eine zeitliche Abfolge von betonten und unbetonten Silben. Die Melodie der Stimme bezeichnet hier die Abfolge der Tonhöhen der Stimme.

Nach Ausführungsformen werden einer oder mehrere der Parameter der Stimme des Nutzers zum Zuordnen des emotionalen Zustands zu dem Nutzer und/oder zum Authentifizieren des Nutzers verwendet.

Ausführungsformen können den Vorteil haben, dass anhand der dieser Parameter emotionale Zustände des Nutzers effektive bestimmt werden können. Bereits die allgemeine Körperspannung wirkt auf die vielen kleinen Muskeln, die am Entstehen der Laute beteiligt sind. Da die Stimm- und Artikulationsmuskeln sich leicht beeinflussen lassen, schlagen sich Emotionen die Stimme eines Nutzers nieder. Emotionen wie beispielswiese Ärger, Freude oder Furcht können etwa durch Vorgänge in den Kehlkopfmuskeln hörbar sein.

Nach Ausführungsformen ist das erste Kommunikationssystem dazu konfiguriert, mittels Sprachsteuerung durch den Nutzer gesteuert zu werden. Ausführungsformen können den Vorteil haben, dass im Falle einer Sprachsteuerung des ersten Kommunikationssystems, die Stimme des Nutzers zum Steuern des Kommunikationssystems benutzt wird. Dies erlaubt es stimmbasierte Daten den Nutzer ohne Zusatzaufwand für den Nutzer zu erfassen.

Auf jede Authentifizierungsanfrage wird eine Authentifizierung mit einem Klassifikationsergebnis durchgeführt. Anschließend wird ein Authentifizierungssignal generiert, welches Informationen über das Ergebnis der Authentifizierung umfasst. In einer Ausführungsform wird ein Authentifizierungssignal nur dann erzeugt, wenn die Authentifizierung erfolgreich war. Beispielsweise kann das Authentifizierungssignal eine Vorrichtung ansteuern oder einen Prozess starten. In einer weiteren Ausführungsform wird ein Authentifizierungssignal nur dann erzeugt, wenn die Authentifizierung nicht erfolgreich war. Beispielsweise ist eine Zugangskontrolle für alle Nutzer geöffnet so lange sich die Nutzer authentifizieren können. Die Zugangskontrolle wird erst dann verschlossen, wenn einer der Nutzer sich nicht authentifizieren kann.

In einer weiteren Ausführungsform der Erfindung wird das Klassifikationsergebnis, welches letztendlich aus dem ersten und zweiten Zwischenergebnis generiert wird, zu einem resultierenden Konfidenzwert zusammengefasst. Das Zusammenfassen kann beispielsweise, aber nicht zwangsweise, die Bildung eines Mittelwerts, eines Medians oder eines Modalwerts umfassen.

Durch die Bildung eines resultierenden Konfidenzwertes und der Verwendung des ersten und zweiten Zwischenergebnisses ergibt sich in vorteilhafter Weise, dass nur ein einziger Zahlenwert nötig ist, um den Nutzer zu authentifizieren. Es werden keine Details bezüglich der Anwendungsnutzung, der verwendeten Parameter oder der Person des Nutzers, versendet, um den Nutzer zu authentifizieren. Dies schützt insbesondere die Datensicherheit bzw. die Anonymität des Nutzers, da aus dem resultierenden Konfidenzwert nicht mehr nachvollziehbar ist, aus welchen Klassifikationsparametern sich dieser im Detail zusammensetzt, welche Werte die Klassifikationsparameter jeweils aufweisen und welchen emotionalen Zustand der Nutzer innehat.

In einer Ausführungsform sendet ein Programm, welches von dem ersten Kommunikationssystem umfasst wird, eine Authentifizierungsanfrage an das Betriebssystem des ersten Kommunikationssystems und/oder ein für die Authentifizierung konfiguriertes Anwendungsprogramm, welches auf dem ersten Kommunikationssystem implementiert ist. Eine Anwendung kann beispielsweise ein Anwendungsprogramm bzw. eine Applikation umfassen, welche auf dem ersten Kommunikationssystem implementiert ist und/oder über das erste Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Eine solches Anwendungsprogramm kann beispielsweise dazu konfiguriert sein eine nützliche oder gewünschte, nicht systemtechnische Funktionalität zu bearbeiten oder zu unterstützen.

Sendet ein Programm die Authentifizierungsanfrage, so ergibt sich in vorteilhafter Weise, dass beliebige Programme das Verfahren zur Authentifizierung nutzen können. Insbesondere Programme, die eine hohe Datensicherheit bedürfen oder Programme die mit sensiblen Daten des Nutzers arbeiten, können so vor ungewolltem Zugriff geschützt werden. Ein Fluglotse, der emotional unausgeglichen, beispielsweise erregt und wütend ist, kann sich beispielsweise an seinem Arbeitsplatz, welcher das Verfahren der Authentifizierung unterstützt, nicht einloggen, um zu verhindern, dass sein emotionaler Zustand seine Arbeit und damit die Sicherheit des Flugverkehrs beeinflusst.

In einer Ausführungsform ist das erste Kommunikationssystem mit einem zweiten Kommunikationssystem kommunikativ verbunden, wobei das zweite Kommunikationssystem die Authentifizierungsanfrage sendet, um den Nutzer gegenüber dem zweiten Kommunikationssystem zu authentifizieren, wobei das zweite Kommunikationssystem in Abhängigkeit von dem Authentifizierungssignal angesteuert wird.

Das erste Kommunikationssystem umfasst ferner eine erste Schnittstelle, um mit dem zweiten Kommunikationssystem zu kommunizieren. Das zweite Kommunikationssystem umfasst eine zweite Schnittstelle, um mit dem ersten Kommunikationssystem zu kommunizieren.

Das zweite Kommunikationssystem kann als Computer, als Server, als Rechenzentrum oder als geeignete Anlage zur Datenverarbeitung ausgebildet sein. Über eine dritte Schnittstelle ist das zweite Kommunikationssystem beispielsweise mit einer Vorrichtung kommunikativ verbunden. Die Vorrichtung kann als Schließmechanismus, als Fahrzeug, als Aufbewahrungsmittel oder als Vorrichtung, die einer Authentifizierung bedarf, ausgebildet sein.

In einer Ausführungsform ist das zweite Kommunikationssystem als Steuereinheit einer Tür ausgebildet. Die Tür wird durch die Steuereinheit nur dann angesteuert, wenn sich ein Nutzer erfolgreich authentifiziert hat. In einer weiteren Ausführungsform umfasst das zweite Kommunikationssystem eine Kontrollsteuerung eines Flugzeuges, eines Busses oder eines Zuges. Das Flugzeug bzw. das Fahrzeug lässt sich nur dann starten, wenn eine flugberechtigte Person sich gegenüber dem Flugzeug erfolgreich authentifizieren konnte. Informationen über die berechtigten Personen sind dabei in einem Speicher des Flugzeugs gespeichert.

In einer weiteren Ausführungsform tauschen das erste und das zweite Kommunikationssystem Identifikationsdaten untereinander aus, um die Effizienz der Kommunikation zu steigern bzw. um die Geschwindigkeit der Datenverarbeitung zu steigern. Identifikationsdaten des ersten Kommunikationssystems ermöglichen beispielsweise eine Identifikation des ersten Kommunikationssystems und damit eine Zuordnung des ersten Kommunikationssystems zu einem registrierten Nutzer. Aus den Identifikationsdaten kann das zweite Kommunikationssystem somit ableiten, für welchen Nutzer das erste Zwischenergebnis der verhaltensbasierten Authentifizierung von dem ersten Kommunikationssystem bereitgestellt wird oder werden sollte.

In einer Ausführungsform werden das erste Zwischenergebnis und das zweite Zwischenergebnis an das zweite Kommunikationssystem gesendet, wobei das zweite Kommunikationssystem Daten des Nutzers erfasst und aus den durch das zweite Kommunikationssystem erfassten Daten ein drittes Zwischenergebnis generiert, wobei das zweite Kommunikationssystem das Klassifikationsergebnis generiert, wobei für die Generierung des Klassifikationsergebnisses ferner das dritte Zwischenergebnis verwendet wird.

Durch das Verwenden zweier Kommunikationssysteme ergibt sich in vorteilhafter Weise eine Erhöhung der Sicherheit für das Verfahren. Das erste Kommunikationssystem wird in der Regel von dem Nutzer mitgeführt. Da sich der Nutzer gegenüber dem zweiten Kommunikationssystem über sein Verhalten authentifiziert, existieren keine Passwörter oder PINs, welche ein Spion ausspähen könnte. Das zweite Kommunikationssystem ist dadurch geschützt, dass es in der Regel durch seine Unbeweglichkeit mittels höheren Sicherheitsmaßnahmen geschützt ist. Beispielsweise könnte Wachpersonal und/oder ein Kamerasystem das zweite Kommunikationssystem vor einer Manipulation schützen. Das zweite Kommunikationssystem stellt durch eine gegenüber dem ersten Kommunikationssystem eigenständige Sensorik und sein eigenes Klassifikationsmodul ferner eine von dem ersten Kommunikationssystem unabhängige Prüfinstanz dar.

Durch das Auswerten der durch das erste und/oder zweite Kommunikationssystem erfassten Daten durch das zweite Kommunikationssystem ergibt sich in vorteilhafter Weise eine erhöhte Sicherheit des Authentifikationsverfahrens. Da das erste Kommunikationssystem ständig von dem Nutzer mitgeführt wird, ist das erste Kommunikationssystem einem erhöhten Risiko der Manipulation, insbesondere der Manipulation der Datenverarbeitung des Klassifikationsmoduls, ausgesetzt. Das zweite Kommunikationssystem hingegen kann einen erhöhten Schutz gegenüber der Manipulation aufweisen, da es nicht mobil und nicht tragbar ausgebildet sein muss. Dadurch ist das zweite Kommunikationssystem leichter zu schützen oder zu überwachen, zum Beispiel durch eine Überwachungsanlage oder Wachpersonal.

Das zweite Kommunikationssystem umfasst nach einer Ausführungsform ein Sicherheitsmodul, über welches das erste Kommunikationssystem mit dem zweiten Kommunikationssystem kommuniziert. Die Kommunikation über das Sicherheitsmodul ist eine kryptographisch gesicherte Kommunikation, wobei die dafür notwendigen Daten in einem kryptographisch geschützten Speicherbereich des Sicherheitsmoduls gespeichert sein können.

Die Sicherheit des Authentifikationsverfahrens ist deshalb erhöht, da die Manipulation der Datenverarbeitung des zweiten Kommunikationssystems schwieriger ist als die Manipulation der Datenverarbeitung des ersten Kommunikationssystems.

Die erste Schnittstelle, die zweite Schnittstelle und/oder die dritte Schnittstelle umfassen eine Drahtloskommunikationsschnittstelle. Das erste Kommunikationssystem und das zweite Kommunikationssystem sind mittels der ersten und zweiten Schnittstelle in der Lage über eine Drahtloskommunikation, wie zum Beispiel Radiofrequenzidentifikation (RFID), Nahfeldkommunikation (NFC), WLAN, Bluetooth oder Funk, miteinander zu kommunizieren. Die dritte Schnittstelle kann ferner als eine nicht drahtlose Schnittstelle ausgebildet sein. Die dritte Schnittstelle kann neben den oben genannten Drahtloskommunikationsvarianten beispielsweise eine Schnittstelle für ein Kabel oder eine Leiterbahn umfassen. Ist das zweite Kommunikationssystem in der Vorrichtung integriert oder umgekehrt, so kann eine Leiterbahn besonders vorteilhaft sein, da sie platzsparend und weniger fehleranfällig als ein Kabel ist.

In einer weiteren Ausführungsform der Erfindung umfasst das Generieren des Klassifikationsergebnisses ein Bilden eines Mittelwertes aus dem ersten Zwischenergebnis, dem zweiten Zwischenergebnis und dem dritten Zwischenergebnis.

Durch das Bilden eines Mittelwertes aus dem ersten Zwischenergebnis und dem zweiten Zwischenergebnis vereinfacht sich die Datenverarbeitung, welche das Generieren des Klassifikationsergebnisses umfasst.

In einer weiteren Ausführungsform sind bei der Bildung des Mittelwerts die Zwischenergebnisse jeweils mit einem Gewichtungsfaktor versehen.

Durch das Versehen des ersten Zwischenergebnisses, des zweiten Zwischenergebnisses und des dritten Zwischenergebnisses mit einem Gewichtungsfaktor ergibt sich in vorteilhafter Weise eine erhöhte Sicherheit des Authentifikationsverfahrens. Durch die Gewichtung kann das erste Zwischenergebnis und das zweite Zwischenergebnis an die Sicherheitsbestimmungen der entsprechenden Ausführungsform angepasst werden. Ist beispielsweise das zweite Kommunikationssystem durch ein Kamerasystem gesichert, wird vom Wachpersonal geschützt und/oder befindet sich auf gesichertem Gelände kann dem zweiten Zwischenergebnis ein höheres Gewicht zugewiesen werden, da dem zweiten Kommunikationssystem eine höhere Sicherheit zugeordnet ist als dem ersten Kommunikationssystem.

In einer weiteren Ausführungsform kommunizieren das erste Kommunikationssystem und das zweite Kommunikationssystem über eine kryptografisch gesicherte Drahtlosverbindung. Die kryptografische Sicherung kann das Verwenden eines asymmetrischen Verschlüsselungsverfahrens, eines symmetrischen Verschlüsselungsverfahrens, eines hybriden Verschlüsselungsverfahrens und/oder das Austauschen von Zertifikaten umfassen. Durch das Verwenden einer kryptografisch gesicherten Drahtlosverbindung ergibt sich in vorteilhafter Weise eine erhöhte Sicherheit des gesamten Authentifizierungsverfahrens.

In einer weiteren Ausführungsform umfasst das Verfahren das Senden eines Authentifizierungssignals an das erste Kommunikationssystem durch das zweite Kommunikationssystem aufgrund einer erfolgreichen oder nicht erfolgreichen Authentifizierung.

Ist die Authentifizierung nicht erfolgreich wird nach Ausführungsformen der Grund des Misserfolges ermittelt. Liegt eine fehlerhafte Authentifizierung vor, beispielsweise aufgrund einer abgebrochenen Kommunikationsverbindung zwischen dem ersten und zweiten Kommunikationssystem, so versucht das zweite Kommunikationssystem das Problem zu beheben, zum Beispiel indem es die Verbindung wiederherstellt. Ist der Misserfolg allerdings darauf zurückzuführen, dass das Klassifikationsergebnis das Prüfungsergebnis nicht erfüllt hat, zum Beispiel weil eine unberechtigte Person versucht hat sich zu authentifizieren, so kann das Wachpersonal verständigt, ein Alarm ausgelöst und/oder das zweite Kommunikationssystem gesperrt werden.

In einer weiteren Ausführungsform weist das erste Kommunikationssystem ferner einen internen Speicher auf, wobei das Erfassen der Daten, das Eingeben der Daten in das Klassifikationsmodul und das Generieren des ersten und zweiten Zwischenergebnisses wiederholt ausgeführt werden, wobei das erste und das zweite Zwischenergebnis in dem Speicher des ersten Kommunikationssystems gespeichert werden, wobei auf das Empfangen der Authentifizierungsanfrage hin das erste und das zweite Zwischenergebnis aus dem Speicher des Kommunikationssystems ausgelesen werden.

Durch das wiederholte Erfassen der Daten ergibt sich vorteilhafterweise eine maximal sensible Einteilung der ersten und zweiten Zwischenergebnisse pro Zeiteinheit. Es werden kontinuierlich Daten erfasst, welche kontinuierlich zu ersten und zweiten Zwischenergebnissen verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Zwischenergebnisse kann jederzeit ein Klassifikationsergebnis aus den zeitnah generierten Zwischenergebnissen generiert werden, ohne dass das erste Kommunikationssystem erst abwarten muss, bis ein vorbestimmtes Messintervall abgelaufen und aktuelle Daten verarbeitet wurden. Ferner werden kontinuierlich neue Zwischenergebnisse generiert, so dass bei einer Authentifizierungsanfrage aktuelle Zwischenergebnisse zur Verfügung stehen, sofern der Nutzer in der nahen Vergangenheit das erste Kommunikationssystem verwendet hat.

In einer Ausführungsform umfassen die verhaltensbasierten Daten ferner biometrische Daten des Nutzers, wobei die biometrischen Daten ferner Daten einer grobmotorischen Bewegung und/oder einer feinmotorischen Bewegung umfassen, wobei das Klassifikationsmodul dazu trainiert ist, eine grobmotorische Bewegung und/oder eine feinmotorische Bewegung zu erkennen.

Eine grobmotorische Bewegung und/oder eine feinmotorische Bewegung des aktuellen Nutzers wird durch den mindestens einen Sensor als Daten erfasst. Das Klassifikationsmodul ist zur Erkennung eines generischen grobmotorischen Bewegungsmusters und/oder eines generischen grobmotorischen Bewegungsmusters mithilfe von Trainingsdatensätzen einer Nutzerkohorte trainiert.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des ersten Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen, kann ebenso wie eine Armbewegung, um ein Mobiltelefon aus der Tasche zu ziehen, als grobmotorische Bewegung aufgefasst werden.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand- und/oder Fingermuskulatur, aber auch den Muskeln des Mundes, der Augen und des Gesichtes. Die feinmotorische Bewegung, welche durch einen feinmotorischen Sensor des ersten Kommunikationssystems erfasst wird, kann etwa eine bestimmte Bewegung der Finger umfassen.

Nach Ausführungsformen der Erfindung werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das erste und/oder zweite Kommunikationssystem tätigt. Eine solche Eingabe kann beispielsweise, ohne darauf beschränkt zu sein, das Tippen von Wörtern bzw. Wischen von Wörtern, das heißt einem zu tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung, mit der der Nutzer eine Eingabe tätigt, umfassen. Ferner können feinmotorische Bewegungen Änderungen der Ausrichtung, wie etwa des Neigungswinkels des ersten Kommunikationssystems während der Nutzung umfassen.

Ein Sensor zur Erfassung einer feinmotorischen Bewegung kann beispielsweise als optisches System oder als ein Touchpad bzw. ein Touchscreen, insbesondere, jedoch ohne darauf beschränkt zu sein, ein resistiver Touchscreen, ein oberflächenkapazitiver Touchscreen, ein projiziert kapazitiver Touchscreen oder ein induktiver Touchscreen ausgebildet sein. Durch das Verwenden einer feinmotorischen Bewegung eines Nutzers erhöht sich die Sicherheit der verhaltensbasierten Authentifizierung, da weitere Parameter nötig sind, um den Nutzer zu authentifizieren.

Ein jeder Mensch führt diese grob- und/oder feinmotorischen Bewegungen auf seine eigene Art und Weise aus. Somit kann einem bestimmten Nutzer eines ersten Kommunikationssystems ein ganz bestimmtes, charakteristisches Bewegungsprofil zugeordnet werden. Anhand dieses Bewegungsprofils ist der Nutzer identifizierbar. Die durch den mindestens einen Sensor erfassten Daten werden einem solchen Bewegungsprofil zugeordnet. Das Klassifikationsmodul ist ferner dazu konfiguriert das Bewegungsmuster des Nutzers zu erkennen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welche zuvor ebenfalls trainiert wurde.

Nach Ausführungsformen weist das mobile, tragbare Kommunikationssystem zur Ausführung der verhaltensbasierten Authentifizierung eines Nutzers beispielsweise mindestens einen Sensor (z.B. einen internen Bewegungssensor des Kommunikationssystems) zur Erfassung von Daten einer grob- und/oder feinmotorischen Bewegung des Nutzers, ein Klassifikationsmodul, ein Betriebssystem bzw. eine Anwendung, einen Prozessor und einen internen Speicher auf. Der Sensor zur Erfassung der verhaltensbasierten Daten ist dazu konfiguriert, eine grob- und/oder feinmotorische Bewegung des Nutzers zu erfassen, z.B. mittels einer Erfassung einer Bewegung des Kommunikationssystems, die durch die grob- und/oder feinmotorische Bewegung des Nutzers verursacht wird. Das Klassifikationsmodul ist für die Klassifikation der verhaltensbasierten Daten konfiguriert, auf das Erkennen einer grob- und/oder feinmotorischen Bewegung des Nutzers trainiert, implementiert ein Maschinenlernverfahren und wird durch den Prozessor des mobilen, tragbaren Kommunikationssystems ausgeführt, wobei das Betriebssystem bzw. die Anwendung dazu in der Lage ist den Zugriff auf das Speichersystem aufgrund des Erfolgs der Authentifizierung zu steuern.

Führt der Nutzer beispielsweise eine grobmotorische Bewegung aus und trägt dabei das mobile, tragbare Kommunikationssystem bei sich (z.B. in einer Tasche eines Bekleidungsstücks des Nutzers, wie z.B. in seiner Jacken- oder Hosentasche, oder direkt am Körper), so kann der Sensor diese grobmotorische Bewegung in Form von grobmotorischen Bewegungsdaten erfassen, und zwar aufgrund der Bewegung des Kommunikationssystems, die mittelbar (über das Bekleidungsstück) oder unmittelbar (wenn der Nutzer das Kommunikationssystem am Körper trägt) durch die grobmotorische Bewegung des Nutzers verursacht wurde. Der Sensor kann beispielsweise als ein Beschleunigungssensor oder ein Gyroskop oder eine Kombination aus beidem ausgebildet sein. Die Bewegung des Nutzers kann beispielsweise ein Gehen, ein Joggen, ein Rennen oder eine Bewegung des Armes sein, falls das Kommunikationsgeräts, welches den Sensor aufweist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems aus einer Tasche verstanden werden.

Nach Ausführungsformen umfassen die verhaltensbasierten Daten des Nutzers Bewegungsdaten einer Bewegung des Kommunikationssystems, wobei die Bewegung des Kommunikationssystems durch eine grob- und/oder feinmotorische Bewegung des aktuellen Nutzers des Kommunikationssystems verursacht wird, während der Nutzer das Kommunikationsgerät bei sich trägt.

Nach Ausführungsformen ist der erste Sensor zum Erfassen der verhaltensbasierten Daten dazu konfiguriert, die Bewegung des Kommunikationssystems zu erfassen. Das Klassifikationsmodul des Kommunikationssystems ist zur Klassifikation des Verhaltens des aktuellen Nutzers anhand der verhaltensbasierten Daten konfiguriert, wobei das Klassifikationsmodul ferner zur Erkennung eines generischen Bewegungsmusters mit Hilfe von Trainingsdatensätzen einer Nutzerkohorte trainiert ist. Das Klassifikationsmodul wird durch den Prozessor des Kommunikationssystems ausgeführt.

Die verhaltensbasierte Authentifizierung weist dabei die folgenden Schritte auf:
- Wiederholtes Ausführen des Generierens eines Konfidenzwertes, wobei das Generieren des Konfidenzwertes die folgenden Schritte umfasst:
   - Erfassen der verhaltensbasierten Daten durch den mindestens einen internen Sensor des Kommunikationssystems,
   - Eingabe der Daten in das Klassifikationsmodul,
   - Generieren mindestens eines ersten Konfidenzwertes durch das Klassifikationsmodul,
   - Speichern des mindestens einen ersten Konfidenzwertes in dem Speicher des Kommunikationssystems,
- auf eine Authentifizierungsanfrage hin, Zugreifen auf den Speicher des Kommunikationssystems, um mindestens einen der generierten und gespeicherten ersten Konfidenzwerte aus dem Speicher auszulesen,
- Generieren des mindestens einen Klassifikationsergebnisses unter Verwendung des mindestens einen ersten Konfidenzwertes.

Nach Ausführungsformen umfassen die verhaltensbasierten Daten Bewegungsdaten einer grob- und/oder feinmotorische Bewegung des aktuellen Nutzers des Kommunikationssystems. Beispielsweise handelt es sich bei den Bewegungsdaten um Bewegungsdaten einer Bewegung des Kommunikationssystems, welche durch eine grob- und/oder feinmotorische Bewegung des aktuellen Nutzers des Kommunikationssystems verursacht wird, während der Nutzer das Kommunikationsgerät bei sich trägt.

Nach Ausführungsformen ist das Klassifikationsmodul zur Erkennung eines generischen grob- und/oder feinmotorischen Bewegungsmusters mit Hilfe von Trainingsdatensätzen einer Nutzerkohorte trainiert ist.

Auf die Authentifizierungsanfrage hin greift der Prozessor des mobilen, tragbaren Kommunikationssystems auf den internen Speicher des Kommunikationssystems zu und liest mindestens einen ersten Konfidenzwert aus. Der mindestens eine erste Konfidenzwert wird dann verwendet, um ein Klassifikationsergebnis zu generieren. Dieses wird gegen ein bestimmtes, vordefiniertes Prüfungskriterium geprüft. Erfüllt das Klassifikationsergebnis das Prüfungskriterium, so wird gemäß einer Ausführungsform ein Authentifizierungssignal erzeugt, wobei das Authentifizierungssignal die Information des Erfolges der Authentifizierung des Nutzers umfasst und den Zugriff auf das Speichersystem gewährt. Wird das Prüfungskriterium durch das Klassifikationsergebnis nicht erfüllt, so wird dem Nutzer kein Zugriff auf das Speichersystem gewährt. Das Prüfkriterium ist nach Ausführungsformen erfüllt, falls der erste Konfidenzwert anzeigt, dass die ausgewerteten Verhaltensbasierten Daten den gespeicherten verhaltensbasierten Daten entsprechen.

In einer weiteren Ausführungsform ist das Prüfungskriterium erfüllt, wenn mindestens ein Klassifikationsergebnis einen durch das Prüfungskriterium vorgegebenen Schwellenwert überschreitet und/oder ein durch das Prüfungskriterium vorgegebenes Höchstalter des mindestens einen Klassifikationsergebnisses nicht überschritten wird.

In einer Ausführungsform ist in dem Speicher des mobilen, tragbaren Kommunikationssystems mindestens ein Muster in Form einer Musterfunktion und mindestens ein Vergleichsdatensatz gespeichert, wobei der Vergleichsdatensatz eine Mehrzahl der verhaltensbasierten Daten mit grob- und/oder feinmotorischen Daten umfasst, wobei aus der Mehrzahl der verhaltensbasierten Daten des ersten Vergleichsdatensatzes mindestens ein erster Vergleichsparameter errechnet wird, wobei das Klassifikationsmodul auf die Eingabe der verhaltensbasierten Daten hin die folgenden Schritte ausführt:
- Bestimmen eines Klassifikationsparameters für jeden Parameter, den die verhaltensbasierten Daten umfassen, wobei das Bestimmen der Klassifikationsparameter aus den grob- und/oder feinmotorischen Bewegungsdaten ein Vergleichen der erfassten grob- und/oder feinmotorischen Bewegungsdaten der erfassten verhaltensbasierten Daten mit der mindestens einen Musterfunktion, ein Zuordnen der verhaltensbasierten Daten zu dem der Musterfunktion zugeordneten ersten Muster und ein Erhalten von mindestens einem dem ersten Muster entsprechenden Klassifikationsparameter umfasst, falls die grob- und/oder feinmotorischen Bewegungsdaten dem mindestens einen, ersten Muster zugeordnet werden können,
- Errechnen eines ersten Konfidenzwertes für jeden Klassifikationsparameter durch einen Vergleich des mindestens einen Klassifikationsparameters mit dem jeweiligen Vergleichsparameter des Vergleichsdatensatzes.

Nach Ausführungsformen wird unter Verwendung der Konfidenzwerte eine Zuordnungswahrscheinlichkeit berechnet, welche angibt mit welcher Wahrscheinlichkeit es sich bei dem aktuellen Nutzer um den registrierten Nutzer handelt. Nach einer Ausführungsform werden die ersten Konfidenzwerte zu einem resultierenden Konfidenzwert durch den Prozessor des mobilen, tragbaren Kommunikationssystems verarbeitet, wobei der resultierende Konfidenzwert die Zuordnungswahrscheinlichkeit angibt. Nach einer Ausführungsform werden die einzelnen ersten Konfidenzwerte bei der Auswertung jeweils mit einem Gewichtungsfaktor versehen, wobei die Gewichtungsfaktoren dem jeweiligen ersten Konfidenzwert zugeordnet sind.

Ferner können die nutzerindividuellen Bewegungsmuster in Abhängigkeit davon variieren, in welchem emotionalen Zustand sich der Nutzer befindet. Ein gestresster Nutzer beispielsweise zeigt ein anderes Bewegungsmuster beim Gehen, als ein glücklicher oder entspannter Nutzer. Ferner zeigt beispielsweise ein enttäuschter Nutzer ein anderes Tippverhalten, als ein euphorisierter Nutzer.

Die biometrischen Daten können durch einen Sensor zur Erfassung von biometrischen Daten erfasst werden. Dabei können die biometrischen Daten unter anderem die Maße des Gesichts, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin das erste Kommunikationssystem benutzt und/oder sich authentifizieren möchte. In dem Moment, in dem der Nutzer das erste Kommunikationssystem benutzt und/oder sich authentifizieren möchte, kann je nach ausgeführter Anwendung davon ausgegangen werden, dass der Nutzer auf den Bildschirm des ersten Kommunikationssystems schaut. Dies ist beispielsweise bei einer Chat- oder Nachrichtenanwendung der Fall. Beispielsweise handelt es sich bei dem ersten Kommunikationssystem um ein Smartphone oder ein anderes Telekommunikationssystem, welches mit einer Kamera ausgestattet ist. Nach Ausführungsformen ist diese Kamera auf der Seite des Bildschirms auf dem ersten Kommunikationssystem positioniert, wodurch es möglich ist, dass eine Hintergrundanwendung des ersten Kommunikationssystems ein Foto des Nutzers aufnimmt, während er das erste Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das erste Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten kontinuierlich erfassbar sind, da der Nutzer die Smart-Watch während des regulären Gebrauchs an seinem Handgelenk trägt.

In einer weiteren Ausführungsform umfasst das mobile, tragbare Kommunikationssystem einen Sensor zur Erfassung eines Fingerabdrucks des Nutzers. In vorteilhaften Ausführungsformen ist der Sensor an Stellen des ersten Kommunikationssystems positioniert, an denen der Nutzer mit seinen Fingerspitzen das erste Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers ergibt sich in vorteilhafter Weise, dass die Daten, welche zur Authentifizierung herangezogen werden, höchst persönlich vom Nutzer abhängig sind. Insbesondere biometrische Daten bieten eine hohe Fälschungssicherheit, wodurch die Sicherheit der Authentifizierung gesteigert wird.

Nach Ausführungsformen werden die erfassten stimmbasierten Daten des Nutzers zur verhaltensbasierten Authentifizierung des Nutzers verwendet. Zum einen ist die Stimme eines Menschen von einer Vielzahl individueller physiologische Einflüsse geprägt, weshalb ein eindeutiges individuelles Merkmal des Nutzers bereitstellen kann. Ferner ist das Sprechen eine der maßgeblichen Verhaltensweisen eines Menschen im täglichen Leben. Somit kann unter Verwendung von stimmbasierten Daten das Sprechverhalten bzw. die Sprechgewohnheiten des Nutzers klassifiziert und für eine verhaltensbasierte Authentifizierung genutzt werden. Das Sprechverhalten umfasst beispielsweise Sprechsituationen, in welchen der Nutzer spricht, die Häufigkeit und den Umfang des Sprechens, die gesprochenen Sprachen und/oder Sprachkombinationen, die Wortwahl, Wortmodifikationen und/oder die Aussprache der Wörter.

In einer Ausführungsform umfassen das Zuordnen des Nutzers zu einer Identität eines registrierten Nutzers und das Zuordnen des Nutzers zu einem emotionalen Zustand jeweils die folgenden Schritte:
- Generieren von Vergleichsparametern aus einem Vergleichsdatensatz,
- Generieren von Klassifikationsparametern aus den Daten,
- Vergleichen der Vergleichsparameter mit den Klassifikationsparametern und
- Berechnen der Zuordnungswahrscheinlichkeit der jeweiligen Zuordnung aus einem Ergebnis des Vergleichs,

wobei die Zuordnung des Nutzers zu einer Identität eines registrierten Nutzers aufgrund der Zuordnungswahrscheinlichkeit der Zuordnung des Nutzers zu einer Identität eines registrierten Nutzers erfolgt,
wobei die Zuordnung des Nutzers zu einem emotionalen Zustand aufgrund der Zuordnungswahrscheinlichkeit der Zuordnung des Nutzers zu einem emotionalen Zustand erfolgt.

In einer weiteren Ausführungsform werden die Zuordnung des Nutzers zu einer Identität eines berechtigten Nutzers und die Zuordnung des Nutzers zu einem emotionalen Zustand parallel zueinander ausgeführt. Beispielsweise werden die Zuordnungen von jeweils einem Kern eines Multikernprozessors ausgeführt.

In einer weiteren Ausführungsform wird die Zuordnung des Nutzers zu einer Identität eines registrierten Nutzers vor der Zuordnung des Nutzers zu einem emotionalen Zustand ausgeführt.

Das Ausführen der Zuordnung des Nutzers zu einer Identität eines registrierten Nutzers vor der Zuordnung des Nutzers zu einem emotionalen Zustand bewirkt in vorteilhafter Weise, dass der emotionale Zustand des Nutzers nur dann erfasst wird, wenn er tatsächlich das Kommunikationssystem bei sich trägt und/oder verwendet. In Momenten, in denen der Nutzer das erste Kommunikationssystem nicht bei sich trägt bzw. in denen er das erste Kommunikationssystem nicht verwendet, werden ebenfalls Daten erfasst. Das erste Kommunikationssystem vergleicht die erfassten Daten mit dem Vergleichsdatensatz und bestimmt somit, ob der Nutzer das erste Kommunikationssystem nutzt und/oder bei sich trägt. Nutzt eine Person das erste Kommunikationssystem, welche nicht der registrierte Nutzer ist, beispielsweise weil der Nutzer das erste Kommunikationssystem der Person ausgehändigt hat oder weil die Person dem Nutzer das Kommunikationssystem entwendet hat, so unterscheiden sich die erfassten Daten ebenfalls von den Daten des Vergleichsdatensatzes. In beiden Fällen würde die Zuordnung des emotionalen Zustands nicht durchgeführt werden, da der Nutzer das Kommunikationssystem nicht verwendet. Diese Ausführungsform ist besonders vorteilhaft, da somit die Anzahl der benötigten Rechenoperationen gesenkt und der Energieverbrauch des mobilen, tragbaren ersten Kommunikationssystems gesenkt wird. Eine solche Energieeinsparung kann insbesondere im Fall einer Energieversorgung des mobilen, tragbaren ersten Kommunikationssystems mittels Batterie vorteilhaft sein.

In einer Ausführungsform werden für die Zuordnung des Nutzers zu einer Identität eines registrierten Nutzers und die Zuordnung des Nutzers zu einem emotionalen Zustand zwei verschiedene Vergleichsdatensätze verwendet. In einer weiteren Ausführungsform wird für die Zuordnung des Nutzers zu einer Identität eines registrierten Nutzers und die Zuordnung des Nutzers zu einem emotionalen Zustand ein gemeinsamer Vergleichsdatensatz verwendet.

Ein Vergleichsdatensatz umfasst Daten des Nutzers, welche das Verhalten und/oder eine individuelle Eigenschaft des Nutzers charakterisieren. Die Daten des Vergleichsdatensatzes und die erfassten Daten umfassen mindestens einen Parameter, welcher mindestens eine Eigenschaft des Nutzers und/oder seines Verhaltens quantifiziert. Der Vergleichsdatensatz umfasst die Daten des in dem Kommunikationssystem registrierten Nutzers. Die erfassten Daten umfassen die Daten des aktuellen Nutzers. Das Klassifikationsmodul generiert aus dem Vergleich der erfassten Daten mit dem Vergleichsdatensatz einen ersten Konfidenzwert, welcher den quantitativen Unterschied zwischen Klassifikationsparametern, generiert aus den erfassten Daten, und Vergleichsparametern, generiert aus dem Vergleichsdatensatz, ausdrückt. Der quantitative Unterschied lässt sich in eine Zuordnungswahrscheinlichkeit übersetzen, mit der dem Nutzer die Identität eines registrierten Nutzers bzw. der emotionale Zustand zugeordnet wird. Ist die bestimmte Zuordnungswahrscheinlichkeit größer als ein vorgegebener Schwellenwert, so geniert das Klassifikationsmodul das erste Zwischenergebnis bzw. das zweite Zwischenergebnis, da sich der Nutzer mittels der erfassten Daten einer Identität eines registrierten Nutzers und einem emotionalen Zustand zuordnen lässt. Über ein Festlegen des Schwellenwertes kann ein Kriterium für die Akzeptanz der Zuordnung festgelegt werden.

Besonders vorteilhaft ist diese Ausführungsform, da die erfassten Daten eine doppelte Verwendung finden. Sie werden einerseits dazu verwendet den Nutzer als ein registrierter Nutzer zu identifizieren und andererseits dazu, den emotionalen Zustand des Nutzers zu klassifizieren.

In einer Ausführungsform sind die einzelnen Klassifikationsparameter bei der Berechnung der Zuordnungswahrscheinlichkeit mit jeweils einem Gewichtungsfaktor versehen, wobei die Gewichtungsfaktoren dem jeweiligen Klassifikationsparameter zugeordnet werden.

Durch das Verwenden von Gewichtungsfaktoren für die jeweiligen Klassifikationsparameter bei der Berechnung der Zuordnungswahrscheinlichkeit kann sich in vorteilhafter Weise eine Erhöhung der Genauigkeit der Zuordnungswahrscheinlichkeit und somit bei der Authentifizierung ergeben. Die einzelnen Klassifikationsparameter können nach Wichtigkeit und/oder Genauigkeit Ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers. Ein erster Nutzer könnte beispielsweise regelmäßig eine Radioanwendung seines ersten Kommunikationssystems nutzen, während ein zweiter Nutzer niemals eine Radioanwendung nutzt. Durch die Möglichkeit des Gewichtens der einzelnen Klassifikationsparameter kann dem Klassifikationsparameter für die Nutzung einer Radioanwendung für den ersten Nutzer ein höherer Gewichtungsfaktor zugewiesen werden als dem zweiten Nutzer.

In einer weiteren Ausführungsform der Erfindung sind die Gewichtungsfaktoren der Klassifikationsparameter durch die Authentifizierungsanfrage vorgegeben. Durch das Vorgeben der Gewichtungsfaktoren durch die Authentifizierungsanfrage ergibt sich in vorteilhafter Weise, dass unterschiedliche Klassifikationsparameter individuell in Abhängigkeit davon gewichtet werden können, wie hoch der Sicherheitsgrad der Authentifizierung sein muss. So können beispielsweise bei Authentifizierungen, die einer sehr hohen Zuordnungswahrscheinlichkeit bedürfen, alle Parameter miteinbezogen werden. Demgegenüber werden beispielsweise bei einer Authentifizierung, welche eine niedrige Sicherheitsstufe bedarf, nur einige oder ein einzelner Klassifikationsparameter zur Auswertung herangezogen.

In einer weiteren Ausführungsform der Erfindung sind die einzelnen Gewichtungsfaktoren der jeweiligen Klassifikationsparameter fest vorgegeben. Fest vorgegeben meint in diesem Zusammenhang, dass die Gewichtungsfaktoren von vornerein beispielsweise bei der Erstinbetriebnahme des ersten Kommunikationssystems festgelegt werden und keine Änderung der Gewichtungsfaktoren während des bestimmungsmäßigen Betriebes des ersten Kommunikationssystems vorgegeben sind.

Durch das Vorgeben der Gewichtungsfaktoren für die Klassifikationsparameter ergibt sich in vorteilhafter Weise ein reduzierter Rechenaufwand, welcher insbesondere für mobile, tragbare erste Kommunikationssysteme einen niedrigen Batterieverbrauch zufolge hat. Das mobile, tragbare Kommunikationssystem muss nicht überprüfen, welche Gewichtungsfaktoren für welchen Klassifikationsparameter festzulegen sind, sondern letztendlich nur in seinem Speicher die entsprechenden Klassifikationsparameter und dessen Gewichtungsfaktor auslesen.

In einer weiteren Ausführungsform der Erfindung legt der Nutzer in einem Initiierungsprozess die Gewichtungsfaktoren der einzelnen Klassifikationsparameter selbst fest. Die festgelegten Gewichtungsfaktoren werden dann in einer Konfigurationsdatei in dem Speicher des ersten Kommunikationssystems gespeichert.

Die Gewichtungsfaktoren der einzelnen Klassifikationsparameter werden nach einer weiteren Ausführungsform durch eine zentrale Instanz, beispielsweise den Hersteller des ersten Kommunikationssystems, einen Dritthersteller oder einen Operator bzw. Eigentümer des ersten Kommunikationssystems festgelegt.

Durch das Festlegen der Gewichtungsfaktoren durch den registrierten Nutzer selbst ergibt sich in vorteilhafter Weise, dass der registrierte Nutzer selbst bestimmen kann, wie weit sein Anwendungsverhalten bzw. sein Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden einer feinmotorischen Bewegung nicht oder nur sehr schwach in die Generierung des Klassifikationsergebnisses miteingehen soll, da er das erste Kommunikationssystem, insbesondere zur Texteingabe, üblicherweise nur unregelmäßig nutzt. Der gleiche Nutzer könnte hingegen die Klassifikationsparameter bezüglich einer grobmotorischen Bewegung stärker in die Generierung des Klassifikationsergebnisses miteinfließen lassen, da er einen sehr strukturierten Tagesablauf hat und mit hoher Regelmäßigkeit an bestimmten Orten Sport treibt.

In Ausführungsformen ist die Mehrzahl von emotionalen Zuständen durch Parameterbereiche definiert, welche aus Daten einer Nutzerkohorte berechnet wurden.

In Ausführungsformen umfasst das erste Kommunikationssystem Anwendungen, wobei die Daten ferner Anwendungsdaten des Nutzers umfassen.

In einer weiteren Ausführungsform werden aus den Anwendungsdaten Anpassungsparameter bestimmt, welche externe Einflussfaktoren, d.h. einen Umwelteinfluss, auf die biometrischen Daten beschreiben, wobei die Anpassungsparameter bei der Generierung des zweiten Zwischenergebnisses zur Anpassung der Zuordnung des Nutzers zu einem emotionalen Zustand an die Einflussfaktoren verwendet werden. Mit anderen Worten handelt es sich bei den Anpassungsparametern um Umweltparameter, welche sich speziell aus den Anwendungsdaten ergeben.

Durch das Verwenden der Anpassungsparameter zur Generierung des Klassifikationsergebnisses ergibt sich in vorteilhafter Weise, dass das Klassifikationsergebnis an externe Einflussfaktoren angepasst werden kann. Befindet sich der Nutzer beispielsweise in einer Umgebung mit einer hohen oder niedrigeren Lufttemperatur und wird die Körpertemperatur mittels eines Sensors an einem Handgelenk gemessen, so kann die Messung durch die Lufttemperatur beeinflusst werden. Die gemessene Temperatur an dem Handgelenk kann beispielsweise unter einem Durchschnittswert liegen, falls sich der Nutzer in einer kalten Umgebung befindet. Durch das Verwenden von beispielsweise Wetterdaten, welche die aktuelle Lufttemperatur umfassen, kann die gemessene Temperatur mit den Wetterdaten korrigiert werden. In einem weiteren Beispiel ändert sich der Blutdruck des Nutzers, wenn er sich in einer anderen Höhe über dem Meeresspiegel als gewöhnlich aufhält. Dies kann beispielsweise durch ein Barometer erfasst oder durch einen GPS- oder Galileo-Signal bestimmt werden und somit die Auswertung des Blutdrucks des Nutzers korrigieren. Da solche Einflüsse das Verhalten und/oder den emotionalen Zustand eines Nutzers beeinflussen können, werden gemäß dieser Ausführungsform die Klassifikationsparameter, insbesondere bei starken externen Einflussfaktoren, wie beispielsweise Temperatur- oder Druckunterschieden, unter Verwendung der Anpassungsparameter korrigiert.

Je nachdem welche Anwendungen ausgeführt werden, lassen sich eine Mehrzahl von physiologischen Parametern korrigieren. Insbesondere kann die Kombination von verschiedenen Einflussfaktoren einzelne und/oder eine Mehrzahl von physiologischen Parametern korrigieren. Beispielsweise können Luftfeuchtigkeit und Luftdichte, wobei letztere durch die aktuelle Höhe über dem Meeresspiegel errechnet wird, das Verhältnis von Puls und Atemfrequenz zur Bewegungsgeschwindigkeit beeinflussen. Ist der Einfluss bekannt, kann eine entsprechende Korrektur vorgenommen werden.

In einer Ausführungsform umfassen die Anwendungsdaten:
- Positionsdaten des ersten Kommunikationssystems, welche durch ein Verfahren zur Positionsbestimmung durch einen Sensor zur Bestimmung der Position des ersten Kommunikationssystems erfasst werden, und/oder
- Anwendungsnutzungsdaten des Nutzers, und/oder
- Verbindungsdaten des ersten Kommunikationssystems mit anderen Geräten und/oder
- Kalender- und/oder Uhrzeitdaten einer in dem ersten und/oder zweiten Kommunikationssystem implementierten Uhr oder einer externen Uhr, deren Signal durch einen Sensor des ersten und/oder zweiten Kommunikationssystems empfangen wird und/oder
- Umgebungsdaten, welche mittels mindestens eines internen Umgebungssensors oder mittels mindestens eines externen Umgebungssensors erfasst werden, dessen Signal durch einen Sensor des ersten und/oder zweiten Kommunikationssystems empfangen wird.

Die Positionsdaten des ersten Kommunikationssystems werden durch ein Verfahren zur Positionsbestimmung durch einen Positionssensor des ersten Kommunikationssystems erfasst. Ein solches Verfahren kann zum Beispiel ein Erfassen eines GPS-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifikation des Nutzers ergibt sich in vorteilhafter Weise, dass ein regelmäßiger Aufenthaltsort des Nutzers (zum Beispiel Zuhause, bei der Arbeit oder an anderen Orten, die er regelmäßig aufsucht) erfasst wird. Ein unberechtigter Nutzer, insbesondere ein Dieb, der das erste Kommunikationssystem benutzt, wird sich in der Regel nicht an den Orten aufhalten, welche der registrierte Nutzer regelmäßig aufsucht. Dadurch ist das erste Kommunikationssystem in der Lage zu erkennen, ob der Nutzer der registrierte Nutzer ist. Damit können die Positionsdaten zur Verbesserung der verhaltensbasierten Authentifikation beitragen.

Insbesondere die Erfassung der Positionsdaten über einen längeren Zeitraum hinweg steigert die Sicherheit des Systems, da der Dieb viele der regelmäßig aufgesuchten Orte des Nutzers kennen und sich zusätzlich über längere Zeit an diesen aufhalten muss, um sich erfolgreich authentifizieren zu können.

Die Anwendungsdaten umfassen ein Anwendungsnutzungsverhalten des Nutzers, wobei das Anwendungsnutzungsverhalten Informationen umfasst, welche beschreiben, wann welche Anwendungen von Nutzer auf dem ersten Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen des Anwendungsnutzungsverhaltens des Nutzers in das Authentifizierungsverfahren steigt die Sicherheit des Verfahrens, da ein unberechtigter Nutzer, insbesondere ein Dieb, welcher das erste Kommunikationssystem gestohlen hat, auch das Anwendungsnutzungsverhalten des Nutzers imitieren müsste, um erfolgreich authentifiziert zu werden. Ferner variiert das Anwendungsnutzungsverhalten eines Nutzers mit seinem emotionalen Zustand. Im Umkehrschluss lassen sich aus dem Anwendungsnutzungsverhalten Informationen bezüglich des emotionalen Zustands des Nutzers ableiten. Ein nervöser Nutzer könnte beispielsweise öfters auf die Uhr schauen oder eine Kurznachrichten-Anwendung benutzen. Ein ruhiger Nutzer hört beispielsweise in dem Speicher des ersten Kommunikationssystems gespeicherte Musik.

Aus dem Anwendungsnutzungsverhalten können ferner Hinweise auf einen emotionalen Zustand des Nutzers abgeleitet werden. Startet der Nutzer überdurchschnittlich häufig eine Nachrichtenanwendung, wie etwa eine E-Mail-Anwendung oder einen Instant-Messenger, ohne selbst eine Nachricht zu schreiben, so könnte dies beispielsweise auf einen ungeduldigen oder nervösen Zustand hindeuten. Ferner könnte ein überdurchschnittlich häufiges Wechseln der Anwendungen oder Funktionen einer Anwendung, beispielsweise der Radiosender, auf einen gestressten Zustand hindeuten.

Die Verbindungsdaten des ersten Kommunikationssystems mit anderen Kommunikationsgeräten und Kommunikationssystemen, wie zum Beispiel Computern, kommunikationsfähigen Haushaltsgeräten, können dazu verwendet werden, ein typisches Verbindungsmuster des Nutzers aufzuzeigen. So können zum Beispiel einzelne Geräte über WLAN, Bluetooth, RFID, NFC oder ein Kabel mit dem ersten Kommunikationssystem verbunden werden. So kann für den Nutzer ein Verbindungsprofil angelegt werden, welches Informationen über die regelmäßigen Verbindungen des ersten Kommunikationssystems mit weiteren Geräten enthält.

Beispielsweise kann ein Nutzer das erste Kommunikationssystem mit dem privaten WLAN einer Wohnung oder einem öffentlichen WLAN verbinden. In einer weiteren Ausführungsform der Erfindung verbindet der Nutzer das erste Kommunikationssystem mit Haushaltsgeräten und/oder einem Computer über das Internet oder ein Intranet, wodurch sich ein nutzerspezifisches Verbindungsprofil ergibt. Dieses Verbindungsprofil kann beispielsweise, ohne darauf beschränkt zu sein, eine Verbindung zu einer Waschmaschine, einem Trockner, einem Kühlschrank oder ähnlichen Haushaltsgeräten, sowie Geräten eines Smart-Home-Systems, wie etwa Beleuchtung, Alarmanlage, Klimaanlage, Heizung, Audioanlagen, Video- bzw. Fernsehanlagen, und/oder einem PC umfassen, welche der Nutzer Zuhause über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und gegebenenfalls Zugriff auf die Geräte besitzen muss, mit denen der registrierte Nutzer normalerweise das erste Kommunikationsgerät verbindet.

Durch die Verwendung der Verbindungsdaten zur verhaltensbasierten Authentifikation eines Nutzers ergibt sich in vorteilhafter Weise, dass der aktuelle Nutzer, welcher zum Beispiel eine Smartwatch trägt, sich über das Tragen der Smartwatch authentifizieren kann. Somit fungiert die Smartwatch als eine Art Schlüssel. Ein Dieb, welcher das erste Kommunikationssystem gestohlen hat, müsste also auch die Smartwatch in seinen Besitz bringen, um sich zu authentifizieren.

Kalender- und/oder Uhrzeitdaten können durch eine im ersten Kommunikationssystem implementierte Uhr oder eine externe Uhr, deren Signal durch einen Sensor, insbesondere ein Funksignal durch einen Funksensor, des ersten Kommunikationssystems empfangen wird, erfasst werden. In einer weiteren Ausführungsform der Erfindung werden die Verbindungsdaten des ersten Kommunikationssystems mit anderen Geräten und/oder die Positionsdaten des ersten Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers ergibt sich in vorteilhafter Weise, dass insbesondere durch die Kombination mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein erstes Kommunikationssystem liest. Die Verwendung der Kalender- und/oder Uhrzeitdaten haben somit eine erhöhte Sicherheit des Verfahrens zufolge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist. Ferner kann der emotionale Zustand des Nutzers mit der Tageszeit, dem Wochentag und/oder der Jahreszeit variieren. Beispielsweise ist ein Nutzer am Morgen leichter reizbar, ein weiterer Nutzer fühlt sich regelmäßig unwohl an einem Montagmorgen und ein dritter Nutzer ist niedergeschlagen im Winter.

Ferner ist es möglich Einträge des Kalenders des Nutzers auf emotionale Ereignisse zu überprüfen. Eine eingetragene Trauerfeier kann beispielsweise die Zuordnungswahrscheinlichkeit des Zustands "traurig" erhöhen, ein anstehendes Bewerbungsgespräch oder eine Prüfung können die Wahrscheinlichkeit für den Zustand "nervös" erhöhen.

Nach Ausführungsformen können beispielsweise Abweichungen von einem durchschnittlichen und/oder erwarteten emotionalen Profil eines Nutzers erkannt werden, woraufhin das Klassifikationsergebnis den emotionalen Zustand "Auffälligkeit" umfasst. Ebenso kann ein registrierter Nutzer identifiziert und ein Abgleich mit seinem durchschnittlichen oder üblichen emotionalen Profil vorgenommen werden. Das Klassifikationsergebnis kann den emotionalen Zustand beispielsweise als prozentuale Abweichung von dem durchschnittlichen oder üblichen emotionalen Profil erfassen. Überschreitet die Abweichung einen Schwellenwert, kann dies zu einem negativen Authentifizierungsergebnis führen. Eine Klassifikation nach Abweichungsgrad von einem erwarteten emotionalen Profil kann insbesondere die Privatsphäre und/oder Persönlichkeitsrechte des Nutzers schützen. So können anhand des Klassifikationsergebnisses in diesem Fall beispielsweise keine Rückschlüsse auf die konkrete Gefühlslage oder eine psychologische Diagnose gezogen werden. Anhand des Klassifikationsergebnisses ist beispielsweise nur ablesbar, dass eine signifikante Abweichung vorliegt. Welcher Art diese Abweichung ist, ist nicht notwendigerweise ableitbar.

Durch das Verwenden der Uhrzeit- und Kalenderdaten lässt sich beispielsweise ein emotionales Profil des Nutzers erstellen, dass zeitabhängig beschreibt, welchen emotionalen Zustand der Nutzer gerade aufweist. Anhand dieser Klassifizierung können beispielsweise der Nutzer oder eine zur Auswertung berechtigte Person Untersuchungen bezüglich der Abweichung einleiten. Beispielsweise hat ein Nutzer eine unerlaubte Handlung vorgenommen oder plant eine solche vorzunehmen, weshalb er nervös ist. Das Klassifikationsmodul detektiert die Abweichung des emotionalen Zustandes und kann zur Aufklärung und/oder Früherkennung möglicher Probleme beitragen.

Ferner können beispielsweise anhand von Kalendereinträgen, Nachrichtenmeldungen und/oder amtlichen Verlautbarungen mögliche Einflussfaktoren auf den emotionalen Zustand eines Nutzers abgeleitet werden. Diese Einflussfaktoren können für eine Kalibrierung bzw. Anpassung des zu erwartenden emotionalen Profils des Nutzers verwendet werden. Ist ein ungewöhnliches Ereignis eingetreten oder steht ein ungewöhnliches Ereignis an, so kann das erwartete emotionale Profil entsprechend angepasst werden. Von dem entsprechenden Ereignis verursachte Abweichungen, deren Ursache bekannt ist, können somit vollständig oder zumindest teilweise aus dem Klassifikationsergebnis herausgerechnet werden. Das Klassifikationsergebnis gibt in diesem Fall beispielsweise Abweichungen an, welche zusätzlich zu den von dem entsprechenden Ereignis verursachten Abweichungen auftreten. Hierzu werden Kalendereinträge, Nachrichtenmeldungen und/oder amtlichen Verlautbarungen selbst gemäß ihrem möglichen Einfluss auf die Klassifikation von emotionalen Zuständen klassifiziert und entsprechend berücksichtigt.

In einer weiteren Ausführungsform wird der Abstand zwischen zwei oder mehreren Kommunikationsgeräten eines ersten Kommunikationssystems aufgrund der Signalstärke des Signals der Drahtlosverbindung zwischen den Geräten ermittelt. Ein solches Drahtlosverbindungssignal kann beispielsweise ein Bluetoothsignal, ein WLAN-Signal oder ein Funksignal sein. Der aus dem Drahtlosverbindungssignal ermittelte Abstand zwischen den Geräten kann gemäß dieser Ausführungsform als Teil der Anwendungsdaten erfasst werden und zur verhaltensbasierten Authentifizierung des Nutzers verwendet werden.

Das Erfassen des Abstandes zweier Geräte eines ersten Kommunikationssystems als Teil der Anwendungsdaten und das Verwenden des Abstandes zur verhaltensbasierten Authentifizierung des Nutzers ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um sich zu authentifizieren.

Nach Ausführungsformen der Erfindung wird der sich zeitlich variierende Abstand dazu verwendet, um ein grobmotorisches Bewegungsmuster des Nutzers zu erkennen.

Nach einer weiteren Ausführungsform wird dem Nutzer mittels eines Signals signalisiert, falls die Authentifizierung erfolgreich war.

Das signalisieren der erfolgreichen Authentifizierung bewirkt in vorteilhafter Wiese, dass der Nutzer nach dem Authentifizierungsprozess weiß, dass die Authentifizierung beendet und dem Nutzer Zugriff oder Zutritt gewährt wird. Der Nutzer ist nicht länger ungewiss über den Ausgang der Authentifizierung und kann seine Handlung, beispielsweise das Betreten eines Bereichs, welcher durch ein Sicherheitssystem geschützt ist, oder beispielsweise mit den Startvorbereitungen eines Flugzeugs fortfahren.

In einer Ausführungsform umfasst das Signal das Ergebnis der Zuordnung des Nutzers zu einer Identität eines registrierten Nutzers und/oder das Ergebnis der Zuordnung des Nutzers zu einem emotionalen Zustand.

In einer Ausführungsform umfasst das Verfahren ferner ein Trainieren des Klassifikationsmoduls, sofern die Authentifizierung erfolgreich war, wobei das Trainieren des Klassifikationsmoduls ein Hinzufügen der Daten zu dem Vergleichsdatensatz und ein Entfernen von Daten, welche älter als ein Schwellenalter sind, umfasst. Das Klassifikationsmodul wird auf das nutzerspezifische Verhalten des aktuellen Nutzers unter der Voraussetzung trainiert, dass gemäß dem Klassifikationsergebnis der aktuelle Nutzer ein in dem ersten Kommunikationssystem registrierter Nutzer ist. Das erste Kommunikationssystem speichert die erfassten Daten, um diese für einen Vergleich mit neuen Daten eines nächsten Authentifizierungsversuchs zu verwenden. Dazu muss das erste Kommunikationssystem jedoch die Information eines Erfolges der Authentifizierung erhalten, aus welcher sich ergibt, dass die erfassten Daten auch tatsächlich dem registrierten Nutzer zuzuordnen sind.

Durch das Hinzufügen der Daten zu dem entsprechenden Vergleichsdatensatz im Falle einer erfolgreichen Authentifizierung des Nutzers ergibt sich in vorteilhafter Weise ein rückgekoppeltes Trainieren des Klassifikationsmoduls. Der Vergleichsdatensatz und somit die Vergleichsparameter passen sich dem Verhalten des Nutzers an, wodurch das Verfahren gegenüber geringfügigen Verhaltensänderungen resistent wird bzw. sich diesem anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Ändert sich beispielsweise der Ruhepuls des Nutzers, weil er zum Beispiel seit geraumer Zeit an einem Trainingsprogramm teilnimmt, so würde ein emotionaler Zustand, der durch einen erhöhten Puls erkannt wird, nicht mehr richtig zugeordnet werden können. Bei solchen und ähnlichen Verhaltensänderungen kann sich der Nutzer aufgrund des Speicherns der Daten in dem Speicher des ersten Kommunikationssystems und des Hinzufügens der Daten zu dem entsprechenden Vergleichsdatensatz auch weiterhin erfolgreich authentifizieren.

In einer weiteren Ausführungsform der Erfindung werden die Daten, welche Teil des jeweiligen Vergleichsdatensatzes sind, aus dem Speicher des ersten Kommunikationssystems gelöscht, wenn die Daten älter als eine festgelegte Zeit sind. Die festgelegte Zeit kann beispielsweise Tage, Wochen, Monate oder Jahre betragen. Wird durch das Löschen der Daten der Vergleichsdatensatz vollständig gelöscht, so wird gemäß einer weiteren Ausführungsform der Erfindung ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, das heißt ein neuer Vergleichsdatensatz generiert wurde. Vergleichsdaten für einen solchen neuen Vergleichsdatensatz können beispielsweise erfasst werden, indem sich der Nutzer nichtverhaltensbasiert authentifiziert, beispielsweise über eine PIN oder ein analoges Verfahren, und im Voraus oder im Nachhinein so verhält, dass neue Daten erfasst und in dem Speicher des ersten Kommunikationssystems gespeichert werden, womit die erfassten Daten einen neuen Vergleichsdatensatz bilden.

Durch das Löschen der Daten bei Erreichen eines festgelegten Alters der Daten ergibt sich in vorteilhafter Weise, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete Daten, welche das aktuelle Verhalten des Nutzers nicht mehr korrekt wiederzugeben vermögen, vorsorglich gelöscht werden. Das Löschen von Daten eines bestimmten Alters bewirkt somit, dass das Verhalten des Nutzers in der Vergangenheit, welches nicht notwendigerweise mit dem Verhalten des Nutzers in der Gegenwart übereinstimmen muss, keinen Einfluss auf die verhaltensbasierte Authentifizierung des Nutzers nimmt. Das Alter von Daten bemisst sich beispielsweise ab dem Zeitpunkt der Erfassung und/oder der Speicherung der Daten.

Die Vergleichsparameter werden in einer Ausführungsform erneut aus dem nun modifizierten Vergleichsdatensatz errechnet, um eine nächste Authentifizierung des Nutzers mit aktuellen Vergleichsparametern durchführen zu können.

In einer weiteren Ausführungsform der Erfindung muss sich der Nutzer nach einer Erstinbetriebnahme des ersten Kommunikationssystems authentifizieren.

Eine Authentifikation nach einer Erstinbetriebnahme kann beispielsweise eine Eingabe eines Einmalpassworts bzw. einer Initialisierungs-PIN umfassen, welche einem registrierten Nutzer beispielsweise im Zuge eines rechtmäßigen Erwerbs des ersten Kommunikationssystems zur Verfügung gestellt wird. Nach weiteren Ausführungsformen kann die Authentifikation nach einer Erstinbetriebnahme beispielsweise auch eine Eingabe bzw. ein Senden eines initialen Authentifizierungstokens in bzw. an das erste Kommunikationssystem umfassen. Das initiale Authentifizierungstoken kann beispielsweise von einem zentralen Authentifizierungsservice bereitgestellt werden, demgegenüber sich der Nutzer als berechtigter Nutzer authentifiziert hat.

Durch das Authentifizieren nach der Erstinbetriebnahme ergibt sich somit in vorteilhafter Weise, dass nur ein berechtigter Nutzer das noch untrainierte System nutzen kann. Im Falle einer Erstinbetriebnahme erfolgt nach und/oder zusammen mit der zuvor genannten Authentifizierung des berechtigten Nutzers, falls diese erfolgreich ist, beispielsweise eine automatische Personalisierung des ersten Kommunikationssystems auf den berechtigten Nutzer. Im Zuge der Authentifizierung und/oder danach werden Daten für eine verhaltensbasierte Authentifizierung des berechtigten Nutzers erfasst und zu dem entsprechenden Vergleichsdatensatz hinzugefügt. Somit wird das Klassifikationsmodul auf den entsprechenden Nutzer trainiert, das heißt das erste Kommunikationssystem wird personalisiert. Schlägt die zuvor genannte Authentifizierung des berechtigten Nutzers fehl, so werden beispielsweise keine Daten erfasst oder erfasste Daten werden nicht zu dem Vergleichsdatensatz hinzugefügt.

In einer weiteren Ausführungsform der Erfindung muss der Nutzer das erste Kommunikationssystem nach der Erstinbetriebnahme personalisieren. Wird das erste Kommunikationssystem zum ersten Mal zur verhaltensbasierten Authentifizierung verwendet, sendet das erste Kommunikationssystem ein Signal an den Nutzer. Das Signal umfasst die Aufforderung zur Personalisierung des ersten Kommunikationssystems durch den Nutzer durch ein gezieltes bzw. nur vorgegebenes Verhalten, welches mindestens einen Vergleichsdatensatz generiert. Beispielsweise wird der Nutzer aufgefordert, mit dem ersten Kommunikationssystem zu laufen oder zu gehen.

Durch das Personalisieren des ersten Kommunikationssystems nach der Erstinbetriebnahme aufgrund eines entsprechenden Signals ergibt sich in vorteilhafter Weise, dass der Nutzer das Verfahren zur verhaltensbasierten Authentifizierung möglichst früh anwenden kann. Das Personalisieren nach der Erstinbetriebnahme umfasst dabei das Erfassen von Daten, um daraus den entsprechenden Vergleichsdatensatz aufzubauen.

In einer Ausführungsform sind auf dem Kommunikationssystem mehrere Nutzer registriert und ein Klassifikationsergebnis wird für jeden Nutzer generiert, wobei das Klassifikationsmodul dazu konfiguriert ist einen Nutzer als einen der registrierten Nutzer zu identifizieren, wobei das Klassifikationsmodul konfiguriert ist einen Nutzerwechsel anhand der Daten zu erkennen, wobei das Klassifikationsmodul auf ein Erkennen einer grob- und/oder feinmotorischen Bewegung des Ab- und/oder Anlegens des ersten Kommunikationssystems konfiguriert und auf ein Erkennen von nutzerspezifischen Bewegungsmustern in den Daten trainiert ist.

Nach umfasst die verhaltensbasierte Authentifizierung ferner:
- Wiederholtes Ausführen der Schritte:
   - Generieren mindestens eines zweiten Konfidenzwertes durch das Klassifikationsmodul),
   - Speichern des mindestens einen zweiten Konfidenzwertes in dem Speicher des Kommunikationssystems,
- auf eine Authentifizierungsanfrage hin, Zugreifen auf den Speicher des Kommunikationssystems, um mindestens einen der gespeicherten zweiten Konfidenzwerte aus dem Speicher auszulesen,
- Auswerten des mindestens einen zweiten Konfidenzwertes, um zu überprüfen, ob ein Nutzerwechsel stattgefunden hat,
- Verwerfen der bisherigen Konfidenzwerte, falls ein Nutzerwechsel stattgefunden hat.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, welche das jeweilige erste Kommunikationssystem abwechselnd benutzen, das Verfahren zur verhaltensbasierten Authentifizierung anwenden können.

In einer Ausführungsform ist das erste Kommunikationssystem Teil eines Zutrittskontrollsystems für einen Bereich eines Unternehmens ausgebildet, welchen nur Personen betreten dürfen, welche sich als zutrittsberechtigte Personen authentifizieren. Die Möglichkeit, mehrere Nutzer zu identifizieren, ermöglicht eine Authentifizierung mehrerer Nutzer hintereinander in kurzen zeitlichen Abständen, woraufhin diese Personen in einem kurzen Zeitraum den Bereich betreten können, d.h. Wartezeiten vermieden bzw. minimiert werden. Nach einer weiteren Ausführungsform der Erfindung ist der Zutritt zu dem Bereich im Grundzustand offen. Eine erfolgreiche Authentifizierung gewährt einem Nutzer den Zutritt dadurch, dass ein Schließmechanismus nicht angesteuert wird. Schlägt jedoch eine Authentifizierung fehl, so wird der Schließmechanismus angesteuert und der Zutritt wird dem entsprechenden Nutzer verwehrt.

In einer weiteren Ausführungsform der Erfindung ist das Klassifikationsmodul so konfiguriert, dass es einen Wechsel des Nutzers anhand von grob- und/oder feinmotorischen Daten erkennt. Dazu ist das Klassifikationsmodul beispielsweise auf ein Erkennen einer grob- und/oder feinmotorischen Bewegung des Ab- und Anlegens des ersten Kommunikationssystems konfiguriert. Die unter Umständen bisherigen ersten oder zweiten gespeicherten Zwischenergebnisse werden im Falle eines Nutzerwechsels verworfen, um sicherzustellen, dass bei einem Nutzerwechsel ein nicht authentifizierter Nutzer das erste Kommunikationssystem verwendet. Dieser nicht authentifizierte Nutzer muss sich dann neu authentifizieren.

Nach Ausführungsformen weist das erste Kommunikationssystem ferner ein Mittel zur Erfassung zumindest eines Umweltparameters auf, welcher einen Umwelteinfluss beschreibt, der dazu geeignet ist, das Verhalten des Nutzers zu beeinflussen. Das Verfahren zur Authentifizierung eines Nutzers mittels einer verhaltensbasierten Authentifizierung umfasst nach Ausführungsformen ferner die folgenden Schritte:
- Erfassen des zumindest einen Umweltparameters,
- Auswerten der erfassten verhaltensbasierten Daten durch das Klassifikationsmodul, wobei das Auswerten unter Verwendung des zumindest einen Umweltparameters an den Umwelteinfluss angepasst wird.

Ein Umweltparameter beschreibt einen Umwelteinfluss auf den Nutzer. Als Umweltparameter gelten im Allgemeinen Parameter, die durch die Umwelt bestimmt sind und nicht von dem Nutzer und seinem Verhalten abhängen. Umweltparameter können beispielsweise Parameter sein, die das aktuelle Wetter, insbesondere die Luftfeuchte, den Luftdruck, die Umgebungstemperatur, die Intensität der Sonnenstrahlen, die Windgeschwindigkeit oder die Windrichtung umfassen. Beispielsweise kann sich der Nutzer in einem trockenen Gebiet, in einer (Groß-) Stadt, in einem Wald, an der Küste oder auf dem Meer aufhalten. Umweltparameter können auch die geographischen und/oder politischen Rahmenbedingungen umfassen. Ferner können Umgebungsparameter die Position des Nutzers, insbesondere die Umgebung des Nutzers umfassen. Beispielsweise eine ausgerufene Sicherheits- oder Warnstufe für bestimmte Regionen, eine Lawinenwarnung, eine Terrorwarnung, eine Unfallmeldung, eine Erdbebengefahr oder eine ausgebrochene Krankheit können als Umweltparameter erfasst werden.

Das Verhalten des Nutzers kann durch Umweltparameter beeinflusst werden, sodass die erfassbaren verhaltensbezogenen Daten ebenfalls von dem Umweltparameter abhängen können. Beispielsweise kann ein Nutzer bei Temperaturen über 38° C einen anderen Gang aufweisen als bei Temperaturen, die um die Raumtemperatur liegen. Oder ein Nutzer reagiert nervös auf eine öffentlich ausgerufene Warnmeldung, beispielsweise eine Sturmwarnung, was sich auf den Ruhepuls des Nutzers auswirken kann. Weitere Umweltparameter können die Umgebungslautstärke, insbesondere bei hoher Verkehrsdichte oder an Bahnhöfen, oder eine Umgebungsbewegung sein. Eine Umgebungsbewegung findet statt, wenn sich der Nutzer in einem bewegten Inertialsystem aufhält. Beispielsweise in einem Zug oder auf einem Schiff, insbesondere bei Wellengang. Beispielsweise kann eine laute Umgebung den Nutzer veranlassen lauter zu sprechen.

Bei bekannten Authentifizierungsverfahren werden die Umgebung und ihre Einflüsse nicht berücksichtigt. Das erfindungsgemäße Verfahren berücksichtigt den Einfluss eines Umweltparameters auf den Nutzer für eine Authentifizierung anhand von verhaltensbasierten Daten. Das Auswerten der verhaltensbasierten Daten wird erfindungsgemäß entsprechend dem zumindest einen erfassten Umweltparameter angepasst.

Dadurch ergibt sich in vorteilhafter Weise, dass sich der Nutzer auch unter verschiedenen Umwelteinflüssen erfolgreich Authentifizieren kann.

In einer weiteren Ausführungsform umfasst das Kommunikationssystem ein Umweltparameterklassifikationsmodul. Das Umweltparameterklassifikationsmodul ist mit Trainingsdatensätzen einer Nutzerkohorte für ein Bestimmen von Korrekturen zum Anpassen der Auswertung der erfassten verhaltensbasierten Daten des registrierten Nutzers an Umwelteinflüsse trainiert. Das Anpassen der Auswertung der erfassten verhaltensbasierten Daten an den zumindest einen Umweltparameter umfasst:
I. die Eingabe des erfassten zumindest einen Umweltparameters in das Umweltparameterklassifikationsmodul,
II. das Bestimmen von zumindest einer Korrektur für die Auswertung der erfassten verhaltensbasierten Daten des registrierten Nutzers durch das Umweltparameterklassifikationsmodul,
III. Anpassen der Auswertung der erfassten verhaltensbasierten Daten des registrierten Nutzers an den Umwelteinfluss unter Verwendung der Korrektur.

Die erfassten verhaltensbasierten Daten des registrierten Nutzers beschreiben dabei das Verhalten des registrierten Nutzers. Durch den erfolgreichen Vergleich der verhaltensbasierten Daten des aktuellen Nutzers mit den gespeicherten verhaltensbasierten Daten des registrierten Nutzers, kann der aktuelle Nutzer als der registrierte Nutzer identifiziert werden. Dieser Vergleich wird unter Verwendung der, aus dem Umweltparameter bestimmten, Korrektur angepasst.

Das Umweltparameterklassifikationsmodul kann ferner als ein Teil des Klassifikationsmoduls ausgebildet sein. Alternativ kann das Umweltparameterklassifikationsmodul als ein separates Modul ausgebildet sein.

In einer weiteren Ausführungsform empfängt das erste und/oder zweite Kommunikationssystem den zumindest einen Umweltparameter über eine Kommunikationsschnittstelle. Die Kommunikationsschnittstelle kann insbesondere als eine Drahtloskommunikationsschnittstelle ausgebildet sein.

In vorteilhafter Weise kann das erste/zweite Kommunikationssystem Informationen von anderen Systemen verwenden, um eine Korrektur aus einem Umweltparameter zu bestimmen. Beispielsweise kann das erste/zweite Kommunikationssystem über die Drahtloskommunikationsschnittstelle mit einem öffentlichen Funknetzwerk oder dem Internet kommunizieren und darüber einen oder mehrere Umweltparameter empfangen. In einer weiteren Ausführungsform kann das erste/zweite Kommunikationssystem die über die Drahtloskommunikationsschnittstelle empfangenen Umweltparameter mit Umweltparametern ergänzen, die durch einen Sensor des erste/zweite Kommunikationssystems erfasst wurden. Insbesondere über die Drahtlosschnittstelle empfangene Nachrichten können über einen Sensor erfasste Umweltparameter, wie beispielsweise Wetterdaten, ergänzen.

In einer weiteren Ausführungsform umfasst das Erfassen des zumindest einen Umweltparameters über die Kommunikationsschnittstelle das Empfangen von Nachrichten, amtliche Mitteilungen und/oder Wetterdaten.

In vorteilhafter Weise kann der zumindest eine Umweltparameter mit Daten übertragen werden, die dem ersten Kommunikationssystem über ein Netzwerk sowieso zur Verfügung stehen. Insbesondere Nachrichten und Wetterdaten stehen in öffentlichen Netzwerken zur Verfügung, sodass Smartphone-Nutzer sich Nachrichten über eine entsprechende Software anschauen oder lesen können und stets über das aktuelle Wetter informiert sind. Mit oder aus diesen Daten können beispielsweise Umweltparameter bestimmt werden, welche sich dazu eignen, das Verhalten des Nutzers zu beeinflussen. Wird beispielsweise eine Sturmwarnung von einem Wetterdienst oder eine polizeiliche Warnung vor Verkehrsstau ausgesprochen, so kann dies den Nutzer vorsichtiger werden lassen. Der Nutzer kann dadurch angespannt sein und beispielsweise vorsichtiger am Verkehr teilnehmen, was sich beispielsweise an seiner Gangart zeigen kann. Ferner kann sich das Verhalten des Nutzers aufgrund der Umweltparameter ändern, weil der Nutzer von seiner täglichen Routine abweicht. Beispielsweise nimmt er einen anderen Weg, um nach der Arbeit nach Hause zu kommen, weil er eine Staumeldung empfangen hat. Nachrichten können das Verhalten des Nutzers ebenfalls beeinflussen. Beispielsweise starke und kurzfristige wirtschaftliche Schwankungen können ein Nutzer zum Beispiel euphorisch, verärgert oder deprimiert stimmen, wodurch sich das Verhalten des Nutzers ebenfalls ändert.

In einer weiteren Ausführungsform umfasst das erste/zweite Kommunikationssystem zumindest einen Sensor, mit dem das Kommunikationssystem die Umweltdaten, insbesondere in Form von Wetterdaten, erfassen kann.

In vorteilhafter Weise kann das erste/zweite Kommunikationssystem durch den Sensor dazu in der Lage sein, den zumindest einen Umweltparameter selbst zu erfassen. Das erste/zweite Kommunikationssystem kann damit unabhängig von einer hinreichenden Verbindungsstärke zu einem entsprechenden Netzwerk Umweltparameter erfassen, um die Auswertung der erfassten verhaltensbasierten Daten des registrierten Nutzers zu korrigieren.

Ein Anpassen der Auswertung der erfassten verhaltensbasierten Daten des registrierten Nutzers an den Umwelteinfluss umfasst nach Ausführungsformen auch das Generieren des zweiten Zwischenergebnisses.

In einer weiteren Ausführungsform umfasst das Anpassen der Auswertung der erfassten verhaltensbasierten Daten des registrierten Nutzers an den Umwelteinfluss eine Auswahl der Klassifikationsparameter.

In vorteilhafter Weise können so Klassifikationsparameter für die Authentifizierung des Nutzers je nach Situation der Umwelt aus- oder angeschaltet werden. Beispielsweise kann ein Klassifikationsparameter das Trainingsverhalten des Nutzers im Freien anhand eines Startens einer Anwendung zur Überwachung der Pulsfrequenz während einer Trainingseinheit charakterisieren. Mit anderen Worten, durch den Start der Anwendung signalisiert der Nutzer dem ersten Kommunikationssystem den Beginn einer Trainingseinheit. Der Start der Trainingseinheit sowie die Dauer des Trainings sind für den Nutzer charakteristisch und beschreiben sein Verhalten. Wenn es jedoch regnet und der Nutzer nicht trainieren kann, möchte der Nutzer trotzdem sein erstes Kommunikationssystem verwenden können. Damit er sich verhaltensbasiert authentifizieren kann, erfasst das erste Kommunikationssystem die aktuellen Wetterdaten. Aufgrund des Wetters "Regen" werden die Klassifikationsparameter, die die Trainingseinheit beschreiben, nicht für eine Authentifizierung herangezogen.

In einem weiteren Beispiel gehört zum Verhalten des Nutzers, dass er eine bestimmte Route für eine regelmäßige Reisestrecke wählt. Durch ein Empfangen einer Warnmeldung vor Verzögerungen auf der Route kann der Nutzer eine alternative Route wählen. Die Parameter für die Reise unter normalen Umständen werden in einem solchen Fall abgeschaltet.

Beispielsweise ist der Nutzer unabhängig von seinem emotionalen Zustand in einer Lauten Umgebung genötigt lauter zusprechen. Bei der Generierung des zweiten Zwischenergebnisses kann, im Falle einer Lauten Umgebung, beispielsweise die Lautstärke der Stimme des Nutzers für das erkennen seines emotionalen Zustands vernachlässigt werden.

In einer weiteren Ausführungsform umfasst das Anpassen der Auswertung der erfassten verhaltensbasierten Daten des registrierten Nutzers an den Umwelteinfluss ein Anpassen der Gewichtungsfaktoren durch die Korrektur.

In vorteilhafter Weise können die einzelnen Klassifikationsparameter feiner an die aktuellen Umweltparameter angepasst werden. Ein Klassifikationsparameter kann beispielsweise lediglich weniger stark gewichtet werden, anstatt vollständig außen vor gelassen zu werden. Dies kann eine feinere Einstellungsmöglichkeit und somit eine höhere Genauigkeit der Zuordnungswahrscheinlichkeit bewirken.

In einer weiteren Ausführungsform umfasst das Authentifizieren des Nutzers aufgrund der Zuordnungswahrscheinlichkeit ein Überprüfen, ob die Zuordnungswahrscheinlichkeit eine Schwellenwahrscheinlichkeit überschreitet, wobei das Anpassen der Auswertung der erfassten verhaltensbasierten Daten des registrierten Nutzers an den Umwelteinfluss ein Senken oder ein Erhöhen der Schwellenwahrscheinlichkeit umfasst. Beispielsweise kann bei vielen gleichzeitig auftretenden Umwelteinflüssen auf den Nutzer das Verhalten des Nutzers so stark von dem gewöhnlichen Verhalten abweichen, dass eine Korrektur von vielen Parametern oder Gewichtungsfaktoren sehr rechenintensiv wird.

In vorteilhafter Weise wird durch das Erhöhen oder Senken der Schwellenwahrscheinlichkeit das Verfahren zu Authentifizierung vereinfacht, da durch ein Korrigieren nur eines Wertes das Authentifizieren an den zumindest einen Umweltparameter angepasst werden kann.

In einer weiteren Ausführungsform umfasst das Anpassen der Auswertung der erfassten verhaltensbasierten Daten des registrierten Nutzers an den Umwelteinfluss ein Anpassen der Vergleichsparameter durch die Korrektur.

In vorteilhafter Weise können so Klassifikationsparameter, die bei unterschiedlichen Umweltbedingungen unterschiedliche Werte annehmen, mit zu der Bestimmung der Zuordnungswahrscheinlichkeit beitragen, ohne dass der jeweilige Gewichtungsfaktor geändert wird. Beispielsweise gehört es zum Verhalten eines Nutzers, dass er oft einen bestimmten Musikradiosender hört. Der Nutzer bekommt mit, dass in seiner unmittelbaren Umgebung eine akute Gefahr im Straßenverkehr, beispielsweise Personen auf der Fahrbahn, zu erwarten ist. Der Umweltparameter "Gefahr im Straßenverkehr" könnte beispielsweise durch eine amtliche (polizeiliche) Mitteilung empfangen worden sein. Damit der Nutzer sein erstes Kommunikationssystem weiter verwenden und er trotzdem über das Radio die Nachrichten über einen Nachrichtenradiosender, also einen anderen als den gewohnten Musikradiosender, mitverfolgen kann, kann der Umweltparameter "Gefahr im Straßenverkehr" den Klassifikationsparameter, der die Senderauswahl quantifiziert, ändern.

Nach Ausführungsformen ergibt ein Auswerten der erfassten Umweltparameter durch das Umweltparameterklassifikationsmodul, dass eine verhaltensbasierte Authentifizierung unter Verwendung der erfassten verhaltensbasierten Daten nicht möglich ist. Beispielsweise liegen Umwelteinflüsse vor, welche das Verhalten des Nutzers so beeinflussen können, dass es derart vom charakteristischen Verhalten des registrierten Nutzers abweichen kann, dass das resultierende verhalten nicht mehr mit ausreichender Sicherheit dem registrierten Nutzer zugeordnet werden kann. Beispielsweise werden die möglichen Abweichungen derart groß, dass die Anzahl möglicher Nutzer, welche ein Verhalten innerhalb der Toleranzen der möglich Abweichung so groß wird, dass die Gefahr besteht, dass ein unberechtigter Nutzer des ersten Kommunikationssystems auf Basis einer verhaltensbasierten Authentifizierung fälschlicherweise als registrierte Nutzer erkannt wird. Beispielsweise sind alle verhaltensbasierten Daten von Umwelteinflüssen derart beeinflusst, dass keine zuverlässige verhaltensbasierte Authentifizierung möglich ist. Beispielsweise ist ein Teil der verhaltensbasierten Daten von Umwelteinflüssen derart beeinflusst, dass keine zuverlässige verhaltensbasierte Authentifizierung auf Basis dieser Daten möglich ist, wobei die verbleibenden unbeeinflussten verhaltensbasierten Daten nicht ausreichen für eine verhaltensbasierte Authentifizierung. Beispielsweise betreffen die unbeeinflussten verhaltensbasierten Daten Verhaltensmuster, welche eine große Anzahl an Menschen gemein, d.h. weit verbreitet, sind.

Nach Ausführungsformen wird die verhaltensunabhängige Authentifizierung ausgeführt, falls die Auswerten der erfassten Umweltparameter durch das Umweltparameterklassifikationsmodul ergibt, dass eine verhaltensbasierte Authentifizierung unter Verwendung der erfassten verhaltensbasierten Daten nicht möglich ist. Beispielsweise ergibt die Auswertung, dass die möglichen Abweichungen des charakteristischen Verhaltens aufgrund der Umwelteinflüsse größer als ein vordefinierter Schwellenwert sind. Beispielsweise ergibt die Auswertung, dass erfasste Umweltparameter im Vergleich zu Standardumweltparametern, für welche das bzw. die Klassifikationsparameter trainiert sind, Abweichungen aufweisen, welche größer als ein vordefinierter Schwellenwert sind. Entsprechende Standardumweltparametern sind beispielsweise im Speicher des ersten Kommunikationssystems gespeichert. Nach Ausführungsformen legen die Standardumweltparametern Standardumweltparameterbereiche fest. Nach Ausführungsformen werden im Zuge des Trainierens des bzw. der Klassifikationsmodule des ersten Kommunikationssystems jeweils auch die Umweltparameter erfasst, unter welchen das Training erfolgt ist. Liegen die erfassten Umweltparameter außerhalb des Standardumweltparameterbereichs, wird der Standardumweltparameterbereich um die Umweltparameter erweitert. Nach Ausführungsformen wird der Standardumweltparameterbereich nur unter der Voraussetzung um die erfassten Umweltparameter erweitert, dass die Abweichung der erfassten Umweltparameter vom Standardumweltparameterbereich kleiner als ein vordefinierter Schwellenwert ist. Nach Ausführungsformen werden im Zuge des Trainings des ersten Kommunikationssystems erfasste verhaltensbasierte Daten nur unter der Voraussetzung für das Training berücksichtigt, dass die Umweltparameter unter welchen die entsprechenden verhaltensbasierte Daten erfasst wurden innerhalb des Standardumweltparameterbereich liegen oder dass eine Abweichung zwischen Umweltparameter unter welchen die entsprechenden verhaltensbasierte Daten erfasst wurden und dem Standardumweltparameterbereich kleiner als ein vordefinierter Schwellenwert ist.

Im Weiteren werden Ausführungsformen der Erfindung mit Bezugnahme auf die Zeichnungen näher erläutert.

Es zeigen
- Figur 1: einen schematischen Aufbau eines beispielhaften ersten Kommunikationssystems zur verhaltensbasierten Authentifizierung eines Nutzers,
- Figur 2: einen schematischen Ablauf einer verhaltensbasierten Authentifizierung in einem Ablaufdiagramm,
- Figur 3a: Schritte der verhaltensbasierten Authentifizierung in einem schematischen Ablaufdiagramm,
- Figur 3b: Schritte eines Trainings eines Klassifikationsmoduls in einem schematischen Ablaufdiagramm,
- Figur 4: schematische Schritte der verhaltensbasierten Authentifizierung zur Verarbeitung von Daten,
- Figuren 5: beispielhafte Parameter und ihre Einteilung in Bereiche,
- Figur 6: den schematischen Aufbau eines ersten Kommunikationssystems und eines zweiten Kommunikationssystems,
- Figur 7: eine Anwendung eines ersten und zweiten Kommunikationssystems zur verhaltensbasierten Authentifizierung gemäß einer Ausführungsform,
- Figur 8: das Generieren eines Klassifikationsergebnisses aus Zwischenergebnissen, und
- Figur 9: schematische Schritte der verhaltensbasierten Authentifizierung unter Berücksichtigung von Umweltparametern.

Elemente der nachfolgenden Ausführungsformen, die einander entsprechen, werden mit denselben Bezugszeichen gekennzeichnet.

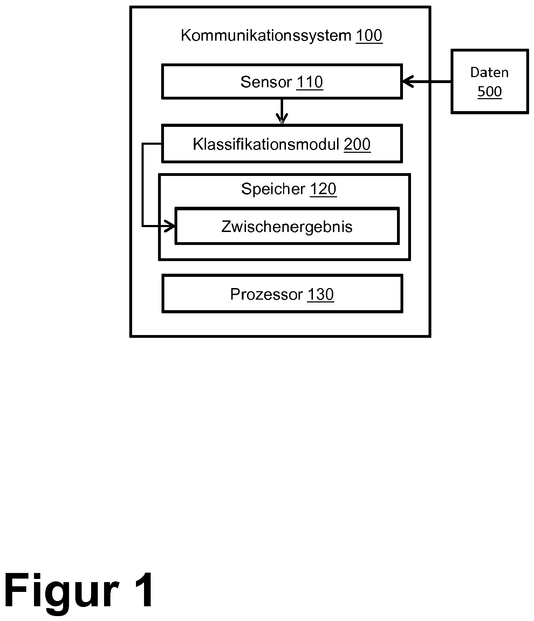

Figur 1 zeigt den schematischen Aufbau eines Kommunikationssystems 100. Das Kommunikationssystem 100 umfasst ein Klassifikationsmodul 200, einen Speicher 120 sowie einen Prozessor 130. Daten 500 werden erfasst und in das Klassifikationsmodul 200 eingegeben. Das Erfassen der Daten 500 unterscheidet sich je nach Art der Daten 500. Die Pulsfrequenz und der Blutdruck werden beispielsweise mittels eines Drucksensors erfasst. Grobmotorische Bewegungsdaten werden beispielsweise mittels eines Sensors zur Erfassung von grobmotorischen Bewegungen erfasst. Dieser kann beispielsweise als Gyroskop und/oder Beschleunigungssensor ausgebildet sein. Feinmotorische Bewegungsdaten werden beispielsweise mittels einer Mensch-Maschine-Schnittstelle erfasst. Diese kann beispielsweise als Touchscreen und/oder Tastatur oder im Falle des zuvor genannten Zitterns als Gyroskop ausgebildet sein. Anwendungsdaten werden mittels entsprechenden Anwendungen und/oder geeigneten Sensoren erfasst. Beispielsweise können durch das Anwendungsnutzungsverhalten selbst Daten 500 generiert werden, ferner können beispielsweise Fotos des Nutzers durch einen Charge-Coupled-Device erfasst und biometrische Daten des Nutzers extrahiert werden.

Die erfassten Daten 500 umfassen stimmbasierte Daten des Nutzers, welche unter Verwendung eines Mikrofons erfasst werde.

Beispielsweise könnte ein Foto des Nutzers Daten bezüglich des Erscheinungsbilds der Gesichtshaut und/oder des Schweißflusses umfassen. In einem weiteren Beispiel wird aus der Tippgeschwindigkeit des Nutzers, dem Lidstand der Augen und insbesondere der Kombination aus beidem, ein Wert errechnet, welcher die Müdigkeit des Nutzers quantifiziert und einen entspannten und/oder beruhigten Zustand des Nutzers identifiziert.

Die Daten 500 werden in das Klassifikationsmodul 200 eingegeben. Das Klassifikationsmodul 200 generiert aus den Daten 500 ein Zwischenergebnis. Dabei wird das Klassifikationsmodul 200 mittels des Prozessors 130 ausgeführt. Das Zwischenergebnis wird in Ausführungsformen in dem Speicher 120 gespeichert und steht dort für einen Ausleseprozess bereit.

Das in Figur 1 dargestellte Kommunikationssystem 100 umfasst ein einzelnes Kommunikationsgerät. Nach Ausführungsformen kann das Kommunikationssystem 100 auch mehrere Geräte umfassen. Das Kommunikationssystem kann beispielsweise, ohne darauf beschränkt zu sein, eine beliebige Kombination aus einer Smart-Watch, Smart-Glasses, einem Smartphone, einem Handheld, einem Tablet, einem Personal Digital Assistant, einem Pager, einem Navigationsgerät, einem Activity Tracker oder einem Gerät zur Erfassung medizinischer Daten umfassen.

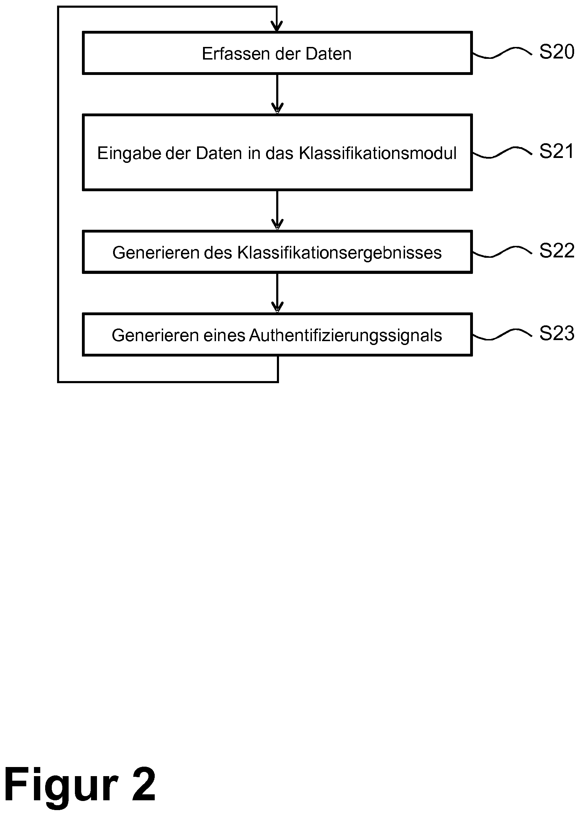

Figur 2 zeigt einen schematischen Ablauf einer Authentifizierung in einem Ablaufdiagramm. In Schritt S20 werden die Daten 500 durch einen Sensor und/oder eine Anwendung erfasst. Auf das Erfassen der Daten 500 (S20) folgt eine Eingabe der Daten 500 in das Klassifikationsmodul 200 (S21). Aus den Daten 500 generiert das Klassifikationsmodul 200 ein Klassifikationsergebnis 600 (S22).

In weiteren Ausführungsformen umfasst das Generieren des Klassifikationsergebnisses 600 (S22) ein Vergleichen der Daten 500 mit einem Vergleichsdatensatz. Der Vergleich wird beispielsweise hinsichtlich einer Mehrzahl von Vergleichsparametern durchgeführt. Auf das Generieren des Klassifikationsergebnisses hin, wird schließlich ein Authentifizierungssignal generiert (S23). Nach Ausführungsformen werden die Schritte S20, S21, S22 und S23 parallel zueinander mit kontinuierlich erfassten Daten ausgeführt, welche kontinuierlich zu einem Klassifikationsergebnis 600 verarbeitet und gespeichert werden.

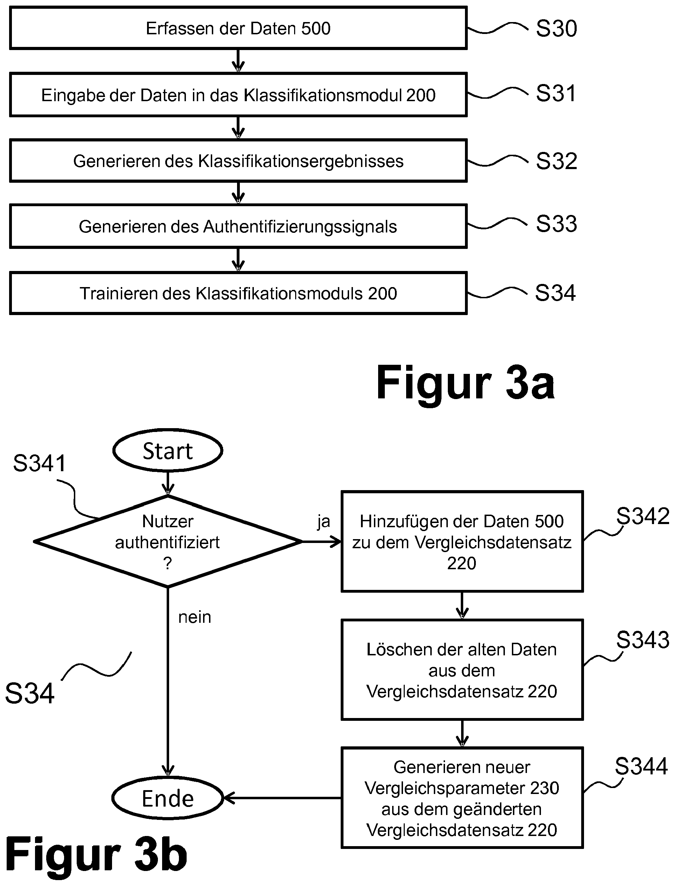

Figur 3a zeigt Schritte einer verhaltensbasierten Authentifizierung gemäß einer Ausführungsform in einem Ablaufdiagramm. In Schritt S30 werden die Daten 500 durch einen Sensor und/oder eine Anwendung erfasst. Auf das Erfassen der Daten 500 (S30) folgt eine Eingabe der Daten 500 in das Klassifikationsmodul 200 (S31). Aus den Daten 500 generiert das Klassifikationsmodul 200 ein Klassifikationsergebnis 600 (S32).

In weiteren Ausführungsformen umfasst das Generieren des Klassifikationsergebnisses 600 (S32) ein Vergleichen der Daten 500 mit einem Vergleichsdatensatz. Der Vergleich wird beispielsweise hinsichtlich einer Mehrzahl von Vergleichsparametern durchgeführt. Nach Ausführungsformen laufen die Schritte S30, S31 und S32 parallel zueinander ab, sodass kontinuierlich Daten 500 erfasst werden, welche kontinuierlich zu Klassifikationsergebnissen verarbeitet werden.

In Schritt S33 wird das Klassifikationsergebnis 600 ausgewertet und ein Authentifizierungssignal generiert. Das Authentifizierungssignal umfasst dabei das Ergebnis der Auswertung des Klassifikationsergebnisses 600. Gemäß einer Ausführungsform erfolgt auf eine erfolgreiche Authentifizierung des Nutzers hin ein Trainieren des Klassifikationsmoduls 200 (S34).

Das Trainieren des Klassifikationsmoduls 200 umfasst ein Hinzufügen der in Schritt S30 erfassten Daten 500 zu dem Vergleichsdatensatz 220, welcher in Schritt S32 genutzt wurde, um das Klassifikationsergebnis 600 zu generieren. Das Trainieren des Klassifikationsmoduls S34 ist detaillierter in Figur 3b dargestellt.

Figur 3b zeigt das Trainieren des Klassifikationsmoduls S34 als Ablaufdiagramm. Zunächst wird überprüft, ob sich der Nutzer erfolgreich authentifizieren konnte S341. Ist die Authentifizierung nicht erfolgreich und der Nutzer somit nicht authentifiziert, so findet kein weiteres Training des Klassifikationsmoduls 200 statt. Konnte der Nutzer authentifiziert werden, so werden zunächst die in S30 erfassten Daten 500 dem entsprechenden Vergleichsdatensatz 220 hinzugefügt S342.

Um das Hinzufügen der Daten 500 zu dem entsprechenden Vergleichsdatensatz 220 zu ermöglichen, weisen die Daten 500 und der Vergleichsdatensatz 220 gemäß einer Ausführungsform eine gleiche Struktur auf. Mit Struktur ist hier das Format der Daten gemeint. Beispielsweise umfassen sowohl die Daten 500 als auch der Vergleichsdatensatz 220 eine Mehrzahl von Werten in Form von Gleitkommazahlen oder ganzen Zahlen. Der Vergleichsdatensatz 220 kann sich gemäß einer weiteren Ausführungsform aus einer Mehrzahl von Daten 500 zusammensetzen, welche zusammen einen Datensatz bilden. Dadurch umfasst der Vergleichsdatensatz 220 automatisch die gleiche Struktur wie die Daten 500, solange sich das Format der erfassten Daten 500 nicht ändert.

Wurden die Daten 500 dem Vergleichsdatensatz 220 hinzugefügt, so wird der Vergleichsdatensatz 220 nach Daten 500 durchsucht, welche ein vordefiniertes Alter erreicht haben. Die gefundenen Daten 500 werden gemäß einer weiteren Ausführungsform aus dem Vergleichsdatensatz 220 gelöscht (S343). Die Reihenfolge der Schritte S342 und S343 ist dabei austauschbar.

Da sich der Vergleichsdatensatz 220 durch das Hinzufügen von Daten 500 und gegebenenfalls durch das Löschen von Daten 500 geändert hat, werden die Vergleichsparameter 230, welche zu dem Generieren des Klassifikationsergebnisses 600 in Schritt S32 beitragen, neu berechnet, um bei einem zukünftigen Authentifizierungsversuch zur Verfügung zu stehen.

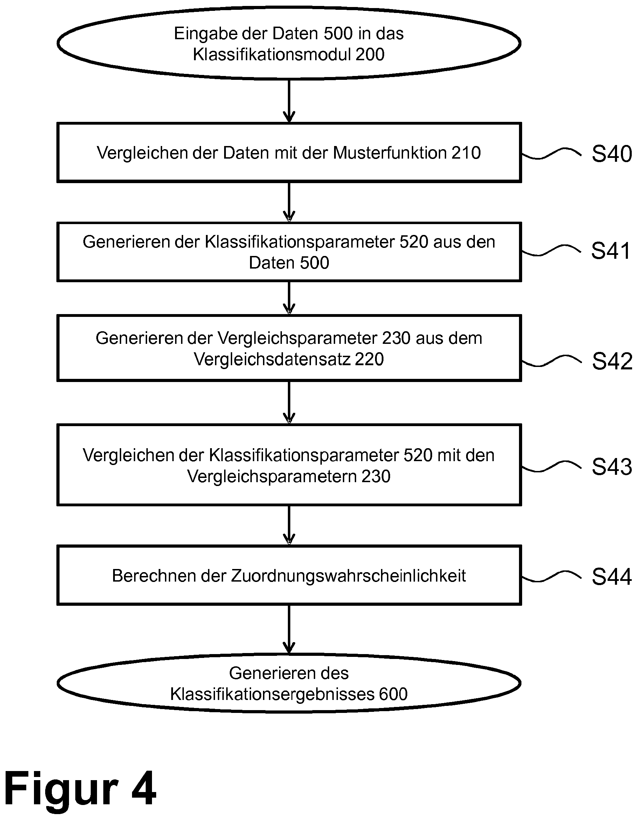

Figur 4 zeigt schematische Schritte der verhaltensbasierten Authentifizierung zur Verarbeitung von Daten gemäß einer Ausführungsform in einem Ablaufdiagramm. Insbesondere Teile des Schritts des Generierens des Klassifikationsergebnisses 600 (vgl. Figur 3a, S32) sind hier dargestellt. Der Prozess startet mit der Eingabe der Daten 500 in das Klassifikationsmodul 200.

Die Daten 500 werden in Schritt S40 zunächst mit einer Musterfunktion 210 verglichen. Das Vergleichen umfasst ein Fitten der Daten 500 unter Verwendung der Musterfunktion 210. Dieser Schritt wird dabei für eine Auswahl an Parametern durchgeführt, deren Verlauf durch eine Funktion charakterisiert werden kann. Parameter, bei denen dies nicht gegeben ist, beispielsweise die Pulsfrequenz oder die Tippgeschwindigkeit, durchlaufen diesen Schritt nicht. Die Daten 500 werden daraufhin Klassifikationsparametern 520 zugeordnet S41.

Das Bestimmen, welche Parameter für das weitere Verfahren als Klassifikationsparameter verwendet werden bzw. welche Werte diese Klassifikationsparameter aufweisen, ist in Schritt S42 dargestellt. In Schritt S43 werden nun die bestimmten Klassifikationsparameter 520 mit Vergleichsparametern 230 verglichen. Die Vergleichsparameter 230 wurden gemäß einer Ausführungsform analog zu dem Trainingsprozess (dargestellt in Figur 3b) aus älteren Daten berechnet.

Die Differenz zwischen den jeweiligen Klassifikationsparametern 520 und den entsprechenden Vergleichsparametern 230 sagt aus, wie gut die Klassifikationsparameter 520 mit den Vergleichsparametern 230 übereinstimmen. Damit lassen sich die erfassten Daten 500 mit den Daten des jeweiligen Vergleichsdatensatzes vergleichen, was im übertragenen Sinne ein Vergleich des Verhaltens des Nutzers mit dem Verhalten eines registrierten Nutzers bzw. dem Verhalten eines Nutzers mit einem bestimmten emotionalen Zustand bedeutet.

Auf Basis des Vergleichs der Klassifikationsparameter 520 mit den Vergleichsparametern 230 lässt sich eine Aussage treffen, wie hoch die Wahrscheinlichkeit ist, dass der Nutzer und der registrierte Nutzer dieselbe Person sind bzw. dass der Nutzer einen bestimmten emotionalen Zustand aufweist. Diese Wahrscheinlichkeit wird durch die Zuordnungswahrscheinlichkeit ausgedrückt, welche in Schritt S44 berechnet wird. Schließlich wird das Klassifikationsergebnis 600 gespeichert.

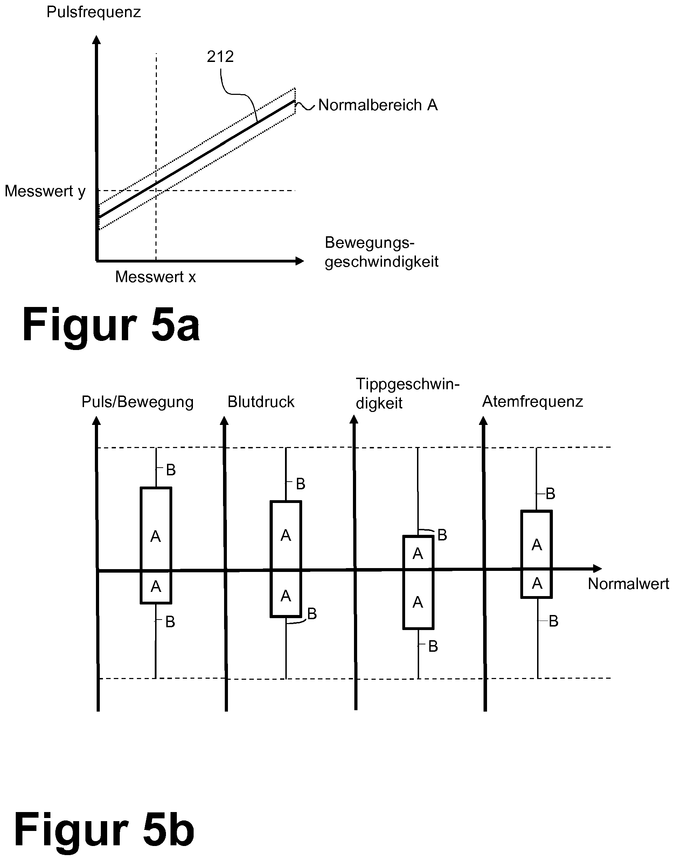

Figur 5a und Figur 5b zeigen beispielhafte Parameter und ihre Einteilung.

In Figur 5a ist schematisch ein Diagramm dargestellt, welches die Pulsfrequenz des Nutzers in Abhängigkeit von der Bewegungsgeschwindigkeit darstellt. Der Puls kann beispielsweise mittels eines Drucksensors erfasst werden, welcher an einer geeigneten Stelle getragen wird. Eine solche Stelle kann beispielsweise das Handgelenk, den Hals oder die Schläfe umfassen. Die Bewegungsgeschwindigkeit kann beispielsweise, ohne darauf beschränkt zu sein, aus den physiologischen Parametern von grobmotorischen Bewegungen, insbesondere der Schrittlänge des Nutzers, bestimmt werden oder aus den Positionsdaten des Kommunikationssystems ermittelt werden. Die Positionsdaten umfassen beispielsweise die Positionsdaten eines GPS- oder Galileo-Signals oder werden aus umliegenden WLAN-Signalen ermittelt.

Typischerweise steigt die Pulsfrequenz mit wachsender Bewegungsgeschwindigkeit an. In Ausführungsformen wird die Pulsfrequenz im Verhältnis zur Bewegungsintensität betrachtet. Das in Figur 5a dargestellte lineare Verhältnis zwischen Pulsfrequenz und Bewegungsgeschwindigkeit dient hier lediglich der Erläuterung und erhebt keinen Anspruch auf Korrektheit. Das Diagramm dient der Veranschaulichung, dass die Pulsfrequenz mit der Bewegungsgeschwindigkeit ansteigt.

In der Mitte des Diagramms ist der Normalwert 212 der Pulsfrequenz (durchgezogene Linie) dargestellt. Um den Normalwert 212 erstreckt sich der Normalbereich A. Der Normalbereich A richtet sich nach den erfassten Messdaten in einem Referenzzustand. In einer Ausführungsform wird der Normalbereich A in einem Kalibrierungsverfahren durch den Nutzer bestimmt, indem sich der Nutzer im Referenzzustand befindet und die Daten des entsprechenden Parameters erfasst werden. Wird beispielsweise die Pulsfrequenz im Verhältnis zu einer Bewegung erfasst, wird der Nutzer aufgefordert sich zu bewegen, während der Puls gemessen wird. Die Daten werden erfasst und als Teil des Vergleichsdatensatzes gespeichert. In einer weiteren Ausführungsform ist der Normalbereich A durch Trainingsdatensätze einer Nutzerkohorte bestimmt. Der Parameter, dessen Normalbereich A bestimmt werden soll, wird für eine Mehrzahl von Personen erfasst. Aus den erfassten Daten aller Trainingspersonen wird der Normalbereich A generiert.

Aus den Messwerten des Normalbereichs A wird der Normalwert 212 des Nutzers generiert. Das Generieren des Normalwerts 212 kann beispielsweise die Bildung eines Mittelwerts, eines Medians oder eines Modalwertes umfassen. Die Grenzen des Normalbereichs A können symmetrisch um den Normalwert 212 verteilt sein, wie in Figur 5A dargestellt. Die Grenzen des Normalbereichs A können ferner auch asymmetrisch um den Normalwert 212 verteilt sein (siehe unten, Figur 5b). In einer Ausführungsform werden die Grenzen des Normalbereichs A aus den Fehlerwerten des Normalwerts 212 bestimmt.

Befindet sich ein Parameter außerhalb des Normalbereichs A, so sucht das Klassifikationsmodul nach emotionalen Zuständen, welche eine entsprechende Abweichung des Parameters von dem Normalwert 212 aufweisen. Kann ein solcher emotionaler Zustand gefunden werden, so wird der emotionale Zustand dem Nutzer zugeordnet.

Ein euphorisierter Zustand umfasst beispielsweise einen oder mehrere Parameter außerhalb des Normalbereichs A. So sind beispielsweise der Puls einer euphorisierten Person erhöht und das Bewegungsmuster zeigt einen schwungvolleren Gang, was durch einen Parameter des Fits einer entsprechenden Fitfunktion dargestellt wird.

Zusammen mit den Daten einer grobmotorischen Bewegung kann der erhöhte Puls als euphorisierter Zustand klassifiziert werden. Ist die Pulsfrequenz erhöht, ohne dass sich der Nutzer "beschwingt" bewegt, so deutet dies beispielsweise darauf hin, dass ein anderer emotionaler Zustand vorliegt, beispielsweise erregt. Um diesen Unterschied klassifizieren zu können, werden beispielsweise die Pulsfrequenz über der Bewegungsgeschwindigkeit als ein Parameter erfasst.

Um dies zu verdeutlichen zeigt Figur 5a die gemessene Pulsfrequenz (waagrechte, gestrichelte Linie, Messwert y). Betrachtet man die gemessene Pulsfrequenz im Vergleich zum Ruhepuls (y-Achsenabschnitt des Normalwertes 212), so liegt die gemessene Pulsfrequenz in dem Bereich B. Das Klassifikationsmodul vergleicht die erfasste Pulsfrequenz auch mit dem Normalwert 212 der entsprechenden Bewegungsgeschwindigkeit (senkrechte, gestrichelte Linie, Messwert x). Unter Berücksichtigung der Bewegungsgeschwindigkeit befindet sich die erfasste Pulsfrequenz in dem Normalbereich A. Somit würden beispielsweise die erhöhte Pulsfrequenz und die erhöhte Bewegungsgeschwindigkeit auf einen euphorisierten Zustand hindeuten.

Ferner kann beispielsweise auch eine relativ starke Änderung eines Parameters in einem relativ kurzen Zeitraum eine Klassifikation des emotionalen Zustandes zur Folge haben. Beispielsweise, wenn der Blutdruck innerhalb weniger Sekunden rapide steigt, oder die Pulsfrequenz in einem kurzen Zeitraum, wie etwa wenige Sekunden, auf einen für den Nutzer hohen Wert ansteigt, kann beispielsweise auf einen Wutanfall hindeuten.

In der Realität bestimmen viele Parameter gemeinsam den emotionalen Zustand eines Nutzers. Diese Parameter wechselwirken teilweise miteinander, sodass sie allein für sich genommen eine relativ geringe Aussagekraft besitzen. In Ausführungsformen wird deshalb eine Mehrzahl von Parametern als Daten erfasst. Die Parameter selbst und/oder die Kombination der Parameter untereinander werden dann in das Klassifikationsmodul eingegeben. Die Anzahl Kombinationen der einzelnen Parameter, die nötig sind, um einen emotionalen Zustand zu klassifizieren geht über das Darstellungsvermögen eines zweidimensionalen Schaubildes hinaus. Das hier dargestellte Beispiel soll lediglich das Prinzip eine Klassifikation veranschaulichen. Figur 5b zeigt beispielhaft vier solcher Parameter.

Die einzelnen Parameter bzw. ihre Korrelationen können unterschiedliche Bereiche A und B aufweisen, wobei die Grenzen zwischen den einzelnen Bereichen jeweils symmetrisch oder antisymmetrisch sein können. In Ausführungsformen wird das Ergebnis der Einteilung der Parameter in die Bereiche A und B in das Klassifikationsmodul eingegeben. Beispielsweise würde eine Puls- zu Bewegung-Verhältnis im oberen Normalbereich A, ein Blutdruck im unteren Normalbereich A, eine Tippgeschwindigkeit im oberen Bereich B und eine Atemfrequenz im oberen Normalbereich A erfasst werden. Durch die Eingabe dieser Werte könnte beispielsweise der emotionale Zustand als "leicht angespannt" oder "hektisch" klassifiziert werden.

In einer weiteren Ausführungsform werden die Werte der Parameter direkt in das Klassifikationsmodul eingegeben. Um die Genauigkeit der Klassifikation zu erhöhen, kann aus den Parametern direkt die Zuordnungswahrscheinlichkeit bestimmt werden. Beispielsweise kann ein erster emotionaler Zustand dadurch klassifiziert werden, dass der Wert eines der Parameter in einem kleinen ersten Bereich außerhalb des Normalbereichs A liegt und ein zweiter emotionaler Zustand dadurch klassifiziert werden, dass der Wert in einem kleinen zweiten Bereich außerhalb des Normalbereichs A liegt. Dem ersten und dem zweiten Bereich sind dabei unterschiedliche Grenzen zugeordnet, wobei sich die beiden Bereiche teilweise überlappen können. Die Pulsfrequenz kann beispielsweise einen Normalwert von 70 Schläge pro Minute (bpm) umfassen. Der Normalbereich sei somit von 65bpm bis 75bpm festgelegt. Nun können beispielsweise außerhalb des Normalbereichs A ein oder mehrere Bereiche verschiedenen emotionalen Zuständen zugeordnet sein. Bei einer Pulsfrequenz von beispielsweise 75 bpm bis 80 bpm kann zum Beispiel der emotionale Zustand als "leicht erregt" klassifiziert werden. Bei einer Pulsfrequenz von 80 bpm bis 90 bpm hingegen würde das Klassifikationsergebnis zum Beispiel "euphorisch" umfassen.

Überlappen zwei Bereiche einander, zum Beispiel, weil "leicht erregt" von 75 bpm bis 85 bpm definiert ist und "euphorisch" von 80 bpm bis 90 bpm reicht, so kann aufgrund des entsprechenden Parameters, in diesem Fall eine Pulsfrequenz von beispielsweise 82 bpm, keine eindeutige Aussage über den emotionalen Zustand getroffen werden, da der Wert des Parameters in dem Überlappbereich liegt. In Ausführungsformen wird die Mehrdeutigkeit durch eine Betrachtung eines oder mehrerer Parameter aufgelöst, sodass eine eindeutige Aussage über den emotionalen Zustand getroffen werden kann. In einer weiteren Ausführungsform wird die Klassifikation des emotionalen Zustandes durch das Bilden einer Mahalanobis-Distanz, einer Euklidischen Distanz und/oder mittels eines Maschinenlernverfahrens bestimmt.

Die Überwachung des Körpers und das permanente Klassifizieren des emotionalen Zustandes kann ferner in vorteilhafter Weise zu einer Früherkennung von Depressionen beitragen. Die kontinuierlich bzw. regelmäßig erfassten Daten können Indizien dafür umfassen und beispielsweise einen Arzt oder einen Psychologen bei einer Untersuchung bei der Diagnose unterstützen.

In analoger Weise kann der emotionale Zustand des Nutzers unter Verwendung von Parametern der Stimme des Nutzers, welche durch die stimmbasierten Daten abgebildet werden, klassifiziert werden. Beispielsweise werden hierzu Klangfarbe, Rhythmus, Melodie und Lautstärke der Stimme analysiert. Für jeden dieser Parameter können beispielsweise Parameterbereiche definiert werden, welche eine, emotionalen Zustand und/oder einer Klasse von emotionalen Zuständen zugeordnet sind. Ist der Nutzer angespannt ändern sich beispielsweise Klangfarbe und Rhythmus der Stimme. Ist er aufgeregt spricht er aufgeregt oder gar wütend, spricht er beispielsweise lauter und schnell. Ferner kann sich die Melodie der Stimme ändern je nachdem, ob der Nutzer sich freut oder traurig ist.

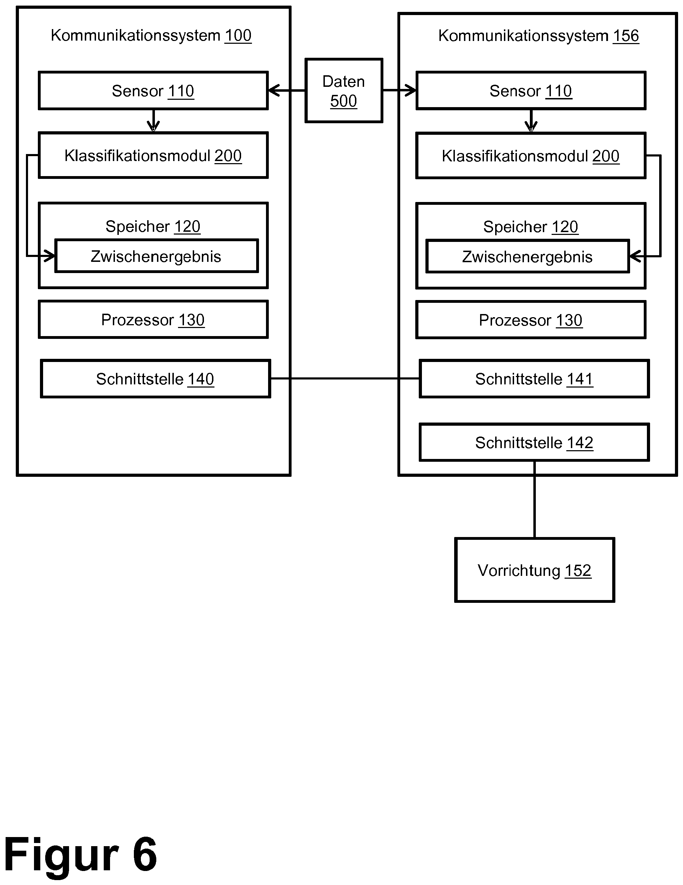

Figur 6 zeigt eine Ausführungsform der Erfindung, welche ein erstes Kommunikationssystem 100 und ein zweites Kommunikationssystem 156 umfasst. Die Kommunikationssysteme 100, 156 sind schematisch dargestellt.

Das erste Kommunikationssystem 100 umfasst ein Klassifikationsmodul 200, einen Speicher 120, einen Prozessor 130 sowie eine erste Schnittstelle 140. Das zweite Kommunikationssystem 156 umfasst ebenfalls einen Speicher 120, einen Prozessor 130, eine zweite Schnittstelle 141 sowie eine dritte Schnittstelle 142. Das erste Kommunikationssystem 100 ist dazu konfiguriert, über die erste Schnittstelle 140 mit dem zweiten Kommunikationssystem 156 zu kommunizieren, wobei das zweite Kommunikationssystem 156 dazu konfiguriert ist, über die zweite Schnittstelle 141 mit dem ersten Kommunikationssystem 100 zu kommunizieren. Ferner ist das zweite Kommunikationssystem 100 über die dritte Schnittstelle 142 mit einer Vorrichtung 152 kommunikativ verbunden.

Das erste Kommunikationssystem 100 und das zweite Kommunikationssystem 156 erfassen jeweils Daten 500 mittels geeigneter Sensoren oder Anwendungen. Die Daten 500 werden sodann in die Klassifikationsmodule 200 eingegeben, welche die Daten 500 zu Zwischenergebnissen verarbeiten. Die Zwischenergebnisse werden dann in den jeweiligen Speichern 120 gespeichert. Die Klassifikationsmodule 200 werden von den jeweiligen Prozessoren 130 ausgeführt.

Die Daten 500, die das erste Kommunikationssystem 100 erfasst, können andere Daten sein, als die, die durch das zweite Kommunikationssystem 156 erfasst werden. Beispielsweise, ohne darauf beschränkt zu sein, kann das erste Kommunikationssystem 100 eine grobmotorische Bewegung erfassen, während das zweite Kommunikationssystem 156 biometrische Daten, zum Beispiel das Gewicht oder einen Fingerabdruck des Nutzers, erfasst.

Die Zwischenergebnisse, welche in dem Speicher 120 des ersten Kommunikationssystems 100 gespeichert sind, werden für ein Ausführen des Verfahrens zur verhaltensbasierten Authentifizierung über die erste Schnittstelle 140 an das zweite Kommunikationssystem 156 gesendet. Unter Verwendung aller dem zweiten Kommunikationssystem 156 zur Verfügung stehenden Zwischenergebnisse generiert das zweite Kommunikationssystem 156 das Klassifikationsergebnis 600.

In einer Ausführungsform umfasst das erste Kommunikationssystem 100 kein Klassifikationsmodul 200. Es erfasst die Daten 500 und sendet diese für die weitere Verarbeitung an das zweite Kommunikationssystem 156. In einer weiteren Ausführungsform erfasst das zweite Kommunikationssystem 156 keine Daten 500. Gemäß dieser Ausführungsform werden alle Daten 500 für die verhaltensbasierte Authentifizierung durch das erste Kommunikationssystem 100 erfasst.

Die erste Schnittstelle 140 und die zweite Schnittstelle 141 umfassen Drahtloskommunikationsschnittstellen. Das erste Kommunikationssystem 100 und das zweite Kommunikationssystem 156 können nach Ausführungsformen zum Beispiel über WLAN, RFID, NFC, Funk oder Bluetooth miteinander kommunizieren. Nach weiteren Ausführungsformen ist die Kommunikation zwischen dem ersten Kommunikationssystem 100 und dem zweiten Kommunikationssystem 156 eine kryptografisch gesicherte Kommunikation. Kryptografisch gesichert bedeutet in diesem Zusammenhang eine symmetrische oder asymmetrische Verschlüsselung und/oder eine Kommunikation auf Basis eines Austauschs von Zertifikaten.

Nach der Auswertung des Klassifikationsergebnisses steuert das zweite Kommunikationssystem 156 die Vorrichtung 152 über die dritte Schnittstelle 142 an. Die dritte Schnittstelle 142 kann nach Ausführungsformen eine Drahtloskommunikationsschnittstelle, analog zu der zweiten Schnittstelle 141, oder eine Alternative umfassen. Nach Ausführungsformen umfasst die dritte Schnittstelle eine kabelgebundene Schnittstelle oder eine Vorrichtung für einen Kontakt mit einer Leiterbahn.

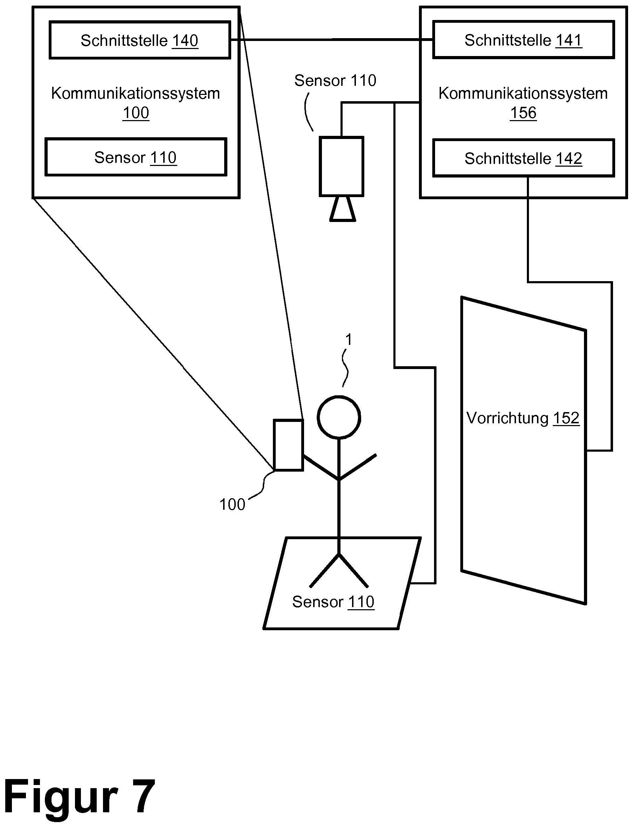

Die Vorrichtung 152 kann nach Ausführungsformen ein Schließmittel, ein Fahrzeug oder ein beliebiges System umfassen, welches einer Authentifizierung des Nutzers bedarf. Eine konkrete Ausführungsform der Erfindung ist in Figur 7 dargestellt.

Figur 7 zeigt eine Ausführungsform der Erfindung, wobei die Ausführungsform schematisch dargestellt ist. Das System zur Anwendung des Verfahrens der verhaltensbasierten Authentifizierung umfasst ein erstes Kommunikationssystem 100, welches von dem Nutzer 1 mitgeführt wird, und ein zweites Kommunikationssystem 156, welches kommunikativ mit einer Vorrichtung 152 verbunden ist.

Das erste Kommunikationssystem 100 umfasst neben den in Figur 6 beschriebenen Komponenten einen Sensor 110 und ist über die erste Schnittstelle 140 mit dem zweiten Kommunikationssystem 156 kommunikativ verbunden. Das zweite Kommunikationssystem 156 umfasst neben den in Figur 6 beschriebenen Komponenten zwei Sensoren 110 und ist über die zweite Schnittstelle 141 mit dem ersten Kommunikationssystem 100 kommunikativ verbunden sowie über die dritte Schnittstelle 142 mit der Vorrichtung 152 kommunikativ verbunden.

Die Vorrichtung 152 ist in dieser Ausführungsform als Tür ausgebildet, welche sich nur für berechtigte bzw. autorisierte Personen öffnet. Eine solche Tür könnte beispielsweise den Zugang zu einem Fußballstadion kontrollieren, in welches nur nicht-aggressive Fans eintritt erlangen. Die Tür öffnet sich nur dann, wenn der Nutzer 1 sich gegenüber dem zweiten Kommunikationssystem 156 erfolgreich authentifiziert hat, er also der Identität eines registrierten Nutzers - beispielsweise einem Abonnenten eines Platzes in einem Stadion oder einem registrierten Kunden - und einem nicht-aggressivem Zustand zugeordnet werden konnte.

Zur Durchführung der verhaltensbasierten Authentifizierung werden in dieser Ausführungsform insgesamt drei Sensoren 110 verwendet. Andere Ausführungsformen umfassen eine beliebige Anzahl von Sensoren. Der von dem ersten Kommunikationssystem 100 umfasste Sensor 110 ist beispielsweise als Beschleunigungssensor ausgebildet und erfasst eine grobmotorische Bewegung des Nutzers 1. Ferner kann der Sensor 110 des ersten Kommunikationssystems 100 ein Mikrofon zum Erfassen der Stimme des Nutzers 1 umfassen. Der erste Sensor 110 des zweiten Kommunikationssystems ist als Kamera ausgebildet und so montiert, dass er das Gesicht des Nutzers 1 erfassen kann. Ferner kann der erste Sensor 110 ein Mikrofon zum Erfassen der Stimme des Nutzers 1 umfassen. Der zweite Sensor 110 des zweiten Kommunikationssystems 156 ist als Gewichtssensor in Form einer Platte im Boden eingelassen.

Während seiner alltäglichen Tätigkeit bewegt sich der Nutzer 1, wodurch der Beschleunigungssensor die Gangart des Nutzers 1 erfasst. Das erste Kommunikationssystem 100 generiert im Laufe des Tages immer wieder aus den grobmotorischen Bewegungsdaten Zwischenergebnisse und speichert diese. Ferner werden stimmbasierte Daten des Nutzers 1 erfasst, welche ebenfalls zur Generierung und Speichern von Zwischenergebnissen herangezogen werden. Möchte der Nutzer 1 nun Zutritt zu dem hinter der Vorrichtung 152 befindlichen Bereich, so muss er sich authentifizieren. Dazu stellt er sich auf die Platte, welche als Gewichtssensor ausgebildet ist. Nachdem das erste Kommunikationssystem 100 und das zweite Kommunikationssystem 156 eine kommunikative Verbindung untereinander aufgebaut haben, sendet das erste Kommunikationssystem 100 die im Laufe des Tages gespeicherten Zwischenergebnisse an das zweite Kommunikationssystem 156. Das zweite Kommunikationssystem 156 erfasst das Gewicht des Nutzers 1 mittels des Gewichtssensors und eines oder mehrere der biometrischen Merkmale des Gesichts des Nutzers. Ferner kann das zweite Kommunikationssystem 156 die Stimme des Nutzers erfassen.

Die Zwischenergebnisse des ersten Kommunikationssystems 100 und das Zwischenergebnis der Anwendungsdaten (biometrischen Daten), erfasst durch den Gewichtssensor und die Kamera, ebenso wie die stimmbasierten Daten werden zusammen verwendet, um ein Klassifikationsergebnis 600 zu generieren. Dieses Klassifikationsergebnis 600 wird zur Authentifizierung verwendet. Ist der Nutzer als ein registrierter Nutzer identifiziert und wurde ihm ein zulässiger emotionaler Zustand zugeordnet, so steuert das zweite Kommunikationssystem 156 die Vorrichtung 152 an und die Tür öffnet sich. Konnte der Nutzer nicht authentifiziert werden, beispielsweise weil nicht genügend biometrische Merkmale des Nutzers durch die Kamera erfasst wurden, so wird die Tür verriegelt. In einer weiteren Ausführungsform umfasst das zweite Kommunikationssystem 156 einen Touchscreen, auf dem ein Wort und eine virtuelle Tastatur angezeigt werden. Der Nutzer muss das Wort eingeben, wodurch das zweite Kommunikationssystem 156 Daten einer feinmotorischen Bewegung des Nutzers erfasst. Die feinmotorischen Bewegungsdaten werden ebenfalls verwendet, um ein Klassifikationsergebnis 600 zu generieren oder die vorherige Generierung des Klassifikationsergebnisses wird wiederholt, wobei die feinmotorischen Bewegungsdaten die unvollständigen bzw. mangelhaften biometrischen Daten ersetzen.

Diese Ausführungsform eignet sich insbesondere als Zutrittskontrollsystem eines Zugangs, welcher einen hohen Personenverkehr aufweist. Nähert sich ein Nutzer dem Zugang, verbindet sich sein erstes Kommunikationssystem mit dem zweiten Kommunikationssystem. Während des Gehens erfassen die Kamera und der Gewichtssensor die biometrischen Daten des Nutzers und er kann, ohne selbst mit dem zweiten Kommunikationssystem aktiv interagieren zu müssen, den Zugang passieren. Schlägt jedoch die Authentifizierung fehl, so bietet der optionale Touchscreen eine zweite Möglichkeit für den Nutzer, den Zugang dennoch zu nutzen ohne ein Passwort kennen zu müssen, indem das zweite Kommunikationssystem die feinmotorische Bewegung des Nutzers als Grundlage einer Authentifizierung verwendet.

Hat beispielsweise ein Dieb dem eigentlichen Nutzer das erste Kommunikationssystem 100 entwendet und versucht nun Zutritt zu dem durch die Vorrichtung 152 gesperrten Bereich zu erlangen, so müsste der Dieb die Gangart des eigentlichen Nutzers nachahmen, sein Gewicht an das des eigentlichen Nutzers anpassen und ebenso sein Gesicht. Die Kriterien zu erfüllen ist für jedes dieser drei Kriterien schwierig, was die Sicherheit des Verfahrens, insbesondere durch Kombination der drei Kriterien, steigert, ohne dass sich der Nutzer 1 ein Passwort merken muss. Ferner könnte beispielsweise ein weiterer Sensor den Puls des Nutzers messen. Der Dieb müsste beispielsweise dann nicht nur den Gang des eigentlichen Nutzers nachahmen, sondern auch seine Nervosität unterdrücken, die dadurch entsteht, dass er mit einem gestohlenen Kommunikationssystem versucht sich den Einlass zu erschleichen.

Kann der Nutzer gemäß einer Ausführungsform nicht authentifiziert werden, so sendet das zweite Kommunikationssystem aufgrund einer nicht erfolgreichen Authentifizierung ein Signal, welches entsprechendes Wachpersonal informiert oder ähnliche Maßnahmen einleitet, die dem Verdacht eines nicht authentifizierten bzw. nicht autorisierten Zutrittsversuchs angemessen sind. Die Zuordnungswahrscheinlichkeiten können dabei beispielsweise so niedrig liegen, dass sich das Verhalten des Nutzers in einem kurzen Zeitraum sehr stark ändern müsste, um in einem solchen Klassifikationsergebnis zu resultieren. Da dieser Fall sehr selten eintritt, ist der Verdacht einer unberechtigten Nutzung des ersten Kommunikationssystems berechtigt.

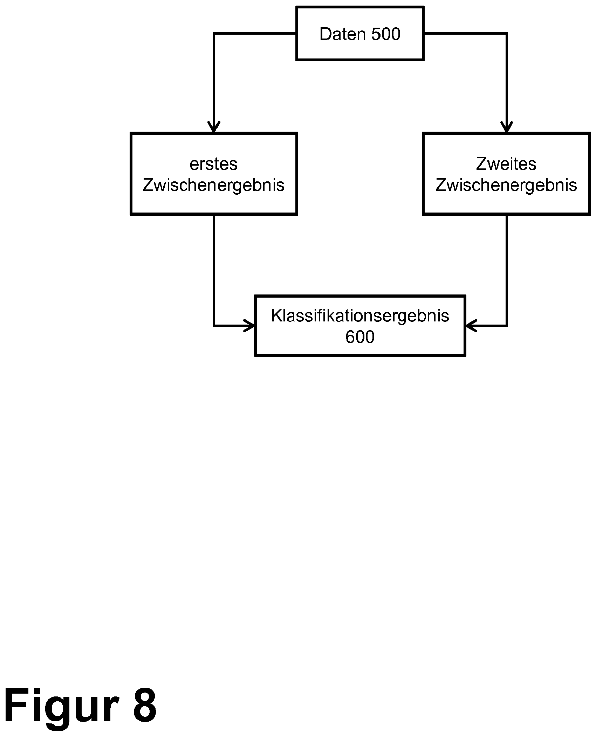

Figur 8 zeigt die schematische beispielhafte Zusammensetzung des Klassifikationsergebnisses 600. Die Daten 500 werden durch das erste Kommunikationssystem erfasst, worauf hin das erste Kommunikationssystem ein erstes Zwischenergebnis und ein zweites Zwischenergebnis verarbeitet.

Die Generierung des ersten Zwischenergebnisses umfasst ein Auswerten der Daten bezüglich der Identität eines registrierten Nutzers. Die Daten werden mit einem Vergleichsdatensatz verglichen, welcher das Verhalten eines registrierten Nutzers wiederspiegelt. Aus dem Ergebnis des Vergleichs wird eine Zuordnungswahrscheinlichkeit für die Zuordnung der Daten zu dem Vergleichsdatensatz generiert. Da die Daten dem aktuellen Nutzer zugeordnet werden und der Vergleichsdatensatz einer Identität eines registrierten Nutzers zugeordnet wird, kann der aktuelle Nutzer einer Identität eines registrierten Nutzers zugeordnet werden.

Die Generierung des zweiten Zwischenergebnisses umfasst ein Auswerten der Daten bezüglich eines zulässigen emotionalen Zustands. Die Daten werden mit einem Vergleichsdatensatz verglichen, welcher eine Auswahl von emotionalen Zuständen wiederspiegelt. Aus dem Ergebnis des Vergleichs wird eine Zuordnungswahrscheinlichkeit für die Zuordnung der Daten zu einem der Zustände aus der Auswahl von emotionalen Zuständen generiert. Da die Daten dem aktuellen emotionalen Zustand des Nutzers zugeordnet werden und er Vergleichsdatensatz der Auswahl von emotionalen Zuständen zugeordnet wird, kann der aktuelle Nutzer einem emotionalen Zustand zugeordnet werden.

Aus dem ersten Zwischenergebnis und dem zweiten Zwischenergebnis wird das Klassifikationsergebnis 600 generiert. In Abhängigkeit davon, wie die Authentifizierung ausgewertet wird, werden die Zwischenergebnisse miteinander kombiniert, um das Klassifikationsergebnis 600 zu generieren. Beispielsweise kann die Voraussetzung für eine erfolgreiche Authentifizierung eine korrekte Zuordnung des Nutzers zu der Identität eines registrierten Nutzers eine Zuordnungswahrscheinlichkeit für die Zuordnung des Nutzers zu einer Identität eines registrierten Nutzers von einem ersten Schwellenwert, beispielsweise 90%, umfassen. Ferner kann die erfolgreiche Authentifizierung die Zuordnungswahrscheinlichkeit der Zuordnung des emotionalen Zustandes von einem zweiten Schwellenwert, beispielsweise von 65% erfordern. Über ein Ändern der Schwellenwerte kann beispielsweise das Sicherheitskriterium für die jeweilige Zuordnung erhöht werden. Um einen höheren Schwellenwert zu erreichen muss beispielsweise die entsprechende Zuordnung genauer sein.

In einer weiteren Ausführungsform kann eine erfolgreiche Authentifizierung eine Gesamtklassifikation umfassen. Dazu werden die Zuordnungswahrscheinlichkeiten miteinander verrechnet. Das Verrechnen kann beispielsweise durch das Bilden eines Mittelwerts, eines Modalwerts oder eines Medians erfolgen. Ferner kann die Zuordnung selbst ein Erfordernis einer erfolgreichen Authentifizierung sein. Beispielsweise erfordert die erfolgreiche Authentifizierung das die mittlere Zuordnungswahrscheinlichkeit bei 80% liegt, das erste Zwischenergebnis den Nutzer einer Identität eines registrierten Nutzers zuordnet und den Nutzer einem nichterregten Zustand zuordnet.

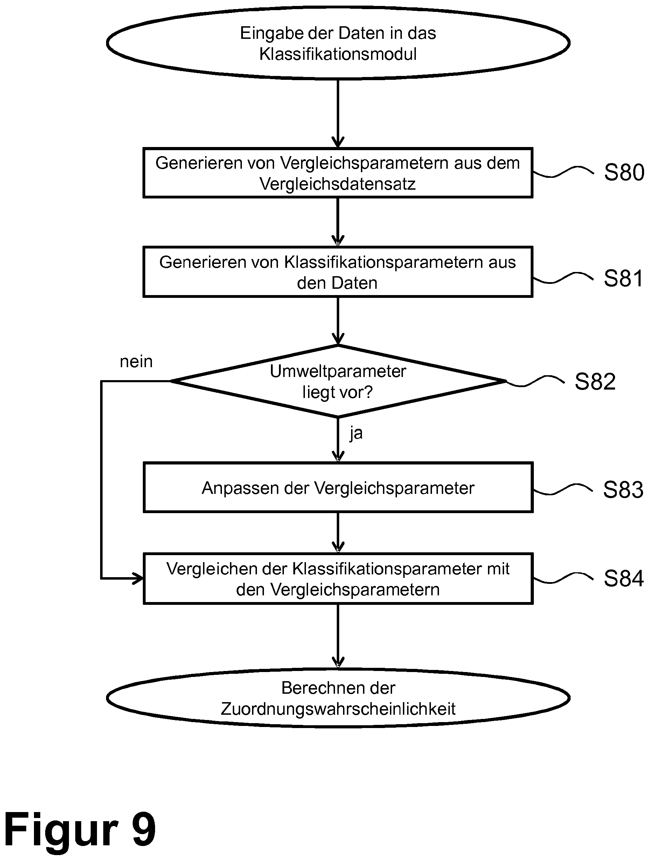

Figur 9 zeigt eine detaillierte Ausführungsform des Schrittes S22 aus Figur 2, dem Auswerten der verhaltensbasierten Daten, für ein Verfahren zur verhaltensbasierten Authentifizierung unter Berücksichtigung von Umweltparametern. Die verhaltensbasierten Daten werden in das Klassifikationsmodul eingegeben. Zunächst werden in Schritt S80 aus dem Vergleichsdatensatz Vergleichsparameter generiert. Dieser Schritt kann nach Ausführungsformen im Anschluss an eine erfolgreiche Authentifizierung erfolgen (siehe insbesondere Figur 3b). In Schritt S81 werden aus den erfassten Daten Klassifikationsparameter analog zu den Vergleichsparametern generiert. Nun liegen Vergleichsparameter und Klassifikationsparameter vor, deren Anzahl identisch ist. In Schritt S82 erfolgt eine Überprüfung, ob ein Umweltparameter vorliegt. Ist dies der Fall folgt Schritt S83. Liegt kein Umweltparameter vor, wird der Schritt S83 übersprungen und das Verfahren fährt mit Schritt S84 fort.

Schritt S83 ist eine beispielhafte Ausführungsform der Korrektur. In Abhängigkeit von dem zumindest einen Umweltparameter werden die Vergleichsparameter modifiziert. Ergibt die Auswertung des Umweltparameters, dass die Korrektur einen vordefinierten Schwellenwert überschreitet oder überschreitet der Umweltparameter selbst einen vordefinierten Schwellenwert wird die verhaltensbasierte Authentifizierung abgebrochen und eine verhaltensunabhängige Authentifizierung als Rückfallposition ausgeführt. In Schritt S84 werden die Klassifikationsparameter mit den eventuell angepassten Vergleichsparametern vergleichen. Die Vergleichsparameter repräsentieren ein quantisiertes Verhalten des registrierten Nutzers, da sie aus verhaltensbasierten Daten generiert wurden, die zu einer erfolgreichen Authentifizierung in der Vergangenheit geführt haben. Die Klassifikationsparameter hingegen repräsentieren den aktuellen Nutzer, da sie aus den aktuell erfassten verhaltensbasierten Daten generiert wurden. Im Grunde wird in Schritt S84 das Verhalten des registrierten Nutzers mit dem Verhalten des aktuellen Nutzers verglichen.

Durch den Vergleich kann eine Zuordnungswahrscheinlichkeit berechnet werden, die aussagt, inwiefern die beiden Verhaltensweisen übereinstimmen. Die einzelnen Parameter können dabei nach Ausführungsformen unterschiedlich gewichtet sein. Liegt die berechnete Zuordnungswahrscheinlichkeit über einer vorgegebenen Schwellenwahrscheinlichkeit, so stimmt das Verhalten des aktuellen Nutzers mit dem Verhalten des registrierten Nutzers zumindest soweit überein, dass das Kommunikationssystem den aktuellen Nutzer als den registrierten Nutzer identifiziert. Der aktuelle Nutzer hat sich damit erfolgreich authentifiziert.

In weiteren Ausführungen können beispielsweise Gewichte der einzelnen Parameter bei der Berechnung der Zuordnungswahrscheinlichkeit durch die Korrektur geändert werden, oder eine Schwellwahrscheinlichkeit für die Authentifizierung des Nutzers erhöht oder gesenkt werden.

### Bezugszeichenliste

- 1:: Nutzer
- 100:: Kommunikationssystem
- 110:: Sensor
- 120:: Speicher
- 130:: Prozessor
- 140:: Schnittstelle
- 141:: Schnittstelle
- 142:: Schnittstelle
- 152:: Vorrichtung
- 156:: Kommunikationssystem
- 200:: Klassifikationsmodul
- 210:: Musterfunktion
- 212:: Normalwert
- 220:: Vergleichsdatensatz
- 230:: Vergleichsparameter
- 500:: Daten
- 520:: Klassifikationsparameter
- 600:: Klassifikationsergebnis

## Patentansprüche

1. Verfahren zur Authentifizierung eines Nutzers (1) eines ersten Kommunikationssystems (100), wobei das erste Kommunikationssystem (100) ein mobiles, tragbares Kommunikationssystem umfasst, welches eine Mehrzahl von Sensoren (110) zur Erfassung von Daten (500), ein Klassifikationsmodul (200) und einen Prozessor (130) aufweist,
wobei einer der Sensoren (110) ein Mikrofon zum Erfassen von stimmbasierten Daten (500) des Nutzers (1) umfasst,
wobei die erfassten Daten (500) ferner stimmunabhängige verhaltensbasierte Daten des Nutzers (1) umfassen,
wobei die verhaltensbasierten Daten ferner biometrische Daten des Nutzers (1) umfassen, wobei die biometrischen Daten ferner Daten einer grobmotorischen Bewegung umfassen,
wobei ein weiterer der Sensoren ein interner Bewegungssensor des Kommunikationssystems zur Erfassung der Daten der grobmotorischen Bewegung des Nutzers ist, welcher dazu konfiguriert ist, die grobmotorische Bewegung des Nutzers mittels einer Erfassung einer Bewegung des Kommunikationssystems zu erfassen, die durch die grobmotorische Bewegung des Nutzers verursacht wird, während der Nutzer das Kommunikationsgerät bei sich trägt,
wobei das Klassifikationsmodul (200) dazu trainiert ist, die grobmotorische Bewegung zu erkennen, wobei das Klassifikationsmodul (200) für ein Klassifizieren der Daten (500) konfiguriert ist, wobei das Klassifizieren ein Zuordnen der erfassten Daten (500) zu einer Identität eines registrierten Nutzers umfasst,
wobei das Klassifizieren ferner ein Zuordnen der erfassten Daten (500) zu einem emotionalen Zustand aus einer Mehrzahl von emotionalen Zuständen umfasst, wobei die erfassten stimmbasierten Daten eine Bestimmung des emotionalen Zustands des Nutzers ermöglichen, wobei die stimmbasierten Daten zumindest einen der folgenden Parameter der Stimme des Nutzers (1) umfassen: Klangfarbe, Rhythmus, Melodie und Lautstärke, wobei einer oder mehrere der Parameter der Stimme des Nutzers zum Zuordnen des emotionalen Zustands zu dem Nutzer verwendet werden,
wobei die Mehrzahl von emotionalen Zuständen eine Auswahl von für die Authentifizierung zulässiger emotionaler Zustände umfasst,
wobei das Klassifikationsmodul (200) durch den Prozessor (130) des ersten Kommunikationssystems (100) ausgeführt wird,
wobei das Verfahren die folgenden Schritte umfasst:
• Empfangen einer Authentifizierungsanfrage,
• Erfassen der Daten (500) durch die Sensoren (110), wobei die Daten (500) sowohl stimmbasierte als auch stimmunabhängige Daten umfassen,
• Eingeben der Daten (500) in das Klassifikationsmodul (200) und Generieren eines ersten Zwischenergebnisses und eines zweiten Zwischenergebnisses aus den Daten (500) durch das Klassifikationsmodul (200),
• Generieren eines Klassifikationsergebnisses (600) unter Verwendung des ersten Zwischenergebnisses und des zweiten Zwischenergebnisses,
• Authentifizieren des Nutzers (1) unter Verwendung des Klassifikationsergebnisses (600),
• Generieren eines Authentifizierungssignals, wobei das Signal eine Information über das Ergebnis der Authentifizierung umfasst,
wobei das erste Zwischenergebnis eine Zuordnung des Nutzers (1) zu einer Identität eines registrierten Nutzers und die Angabe einer Zuordnungswahrscheinlichkeit umfasst, mit der dem Nutzer die Identität des registrierten Nutzers zugeordnet wird,
wobei das zweite Zwischenergebnis eine Zuordnung des Nutzers (1) zu einem emotionalen Zustand und die Angabe einer Zuordnungswahrscheinlichkeit umfasst, mit der dem Nutzer der emotionale Zustand zugeordnet wird,
wobei die Authentifizierung erfolgreich ist, wenn der Nutzer als ein berechtigter Nutzer identifiziert wird und dem Nutzer ein zulässiger emotionaler Zustand aus der Auswahl von zulässigen emotionalen Zuständen zugeordnet wird.

2. Verfahren nach Anspruch 1, wobei das erste Kommunikationssystem (100) dazu konfiguriert ist mittels Sprachsteuerung durch den Nutzer (1) gesteuert zu werden.

3. Verfahren nach einem der Ansprüche 1 bis 2, wobei das erste Kommunikationssystem (100) ein Programm umfasst, wobei das Programm die Authentifizierungsanfrage sendet, um den Nutzer gegenüber dem ersten Kommunikationssystem (100) zu authentifizieren, wobei das erste Kommunikationssystem (100) dem Nutzer den Zugriff auf das Programm in Abhängigkeit von dem Authentifizierungssignal ermöglicht.

4. Verfahren nach einem der Ansprüche 1 bis 2, wobei das erste Kommunikationssystem (100) mit einem zweiten Kommunikationssystem (156) kommunikativ verbunden ist, wobei das zweite Kommunikationssystem (156) die Authentifizierungsanfrage sendet, um den Nutzer gegenüber dem zweiten Kommunikationssystem (156) zu authentifizieren.

5. Verfahren nach Anspruch 4, wobei das erste Zwischenergebnis und das zweite Zwischenergebnis an das zweite Kommunikationssystem (156) gesendet werden, wobei das zweite Kommunikationssystem (156) Daten (500) des Nutzers (1) erfasst und aus den durch das zweite Kommunikationssystem (156) erfassten Daten (500) ein drittes Zwischenergebnis generiert, wobei das zweite Kommunikationssystem (156) das Klassifikationsergebnis (600)generiert, wobei für die Generierung des Klassifikationsergebnisses (600) ferner das dritte Zwischenergebnis verwendet wird.

6. Verfahren nach einem der vorherigen Ansprüche, wobei das erste Kommunikationssystem (100) ferner einen internen Speicher (120) aufweist, wobei das Erfassen der Daten (500), das Eingeben der Daten (500) in das Klassifikationsmodul (200) und das Generieren des ersten Zwischenergebnisses wiederholt ausgeführt werden,
wobei das erste und das zweite Zwischenergebnis in dem Speicher (120) des ersten Kommunikationssystems (100) gespeichert werden,
wobei auf das Empfangen der Authentifizierungsanfrage hin das erste und das zweite Zwischenergebnis aus dem Speicher (120) des ersten Kommunikationssystems (100) ausgelesen werden, und/oder
wobei die biometrischen Daten ferner Daten einer feinmotorischen Bewegung umfassen,
wobei das Klassifikationsmodul (200) dazu trainiert ist, eine feinmotorische Bewegung zu erkennen.

7. Verfahren nach einem der vorherigen Ansprüche, wobei das Zuordnen des Nutzers (1) zu einer Identität eines berechtigten Nutzers (1) und das Zuordnen des Nutzers (1) zu einem emotionalen Zustand jeweils die folgenden Schritte umfassen:
• Generieren von Vergleichsparametern aus einem Vergleichsdatensatz,
• Generieren von Klassifikationsparametern (520) aus den Daten (500),
• Vergleichen der Vergleichsparameter mit den Klassifikationsparametern (520) und
• Berechnen der Zuordnungswahrscheinlichkeit der jeweiligen Zuordnung aus einem Ergebnis des Vergleichs,
wobei die Zuordnung des Nutzers (1) zu einer Identität eines registrierten Nutzers aufgrund der Zuordnungswahrscheinlichkeit der Zuordnung des Nutzers (1) zu einer Identität eines registrierten Nutzers erfolgt,
wobei die Zuordnung des Nutzers (1) zu einem emotionalen Zustand aufgrund der Zuordnungswahrscheinlichkeit der Zuordnung des Nutzers (1) zu einem emotionalen Zustand erfolgt.

8. Verfahren nach Anspruch 7, wobei die einzelnen Klassifikationsparameter (520) bei der Berechnung der Zuordnungswahrscheinlichkeit mit jeweils einem Gewichtungsfaktor versehen sind, wobei die Gewichtungsfaktoren dem jeweiligen Klassifikationsparameter (520) zugeordnet werden.

9. Verfahren nach einem der vorherigen Ansprüche, wobei die Mehrzahl von emotionalen Zuständen durch Parameterbereiche definiert ist, welche aus Daten (500) einer Nutzerkohorte berechnet wurden, und/oder
wobei das erste Kommunikationssystem (100) Anwendungen umfasst, wobei die Daten (500) ferner Anwendungsdaten des Nutzers (1) umfassen.

10. Verfahren nach Anspruch 9, wobei aus den Anwendungsdaten Anpassungsparameter bestimmt werden, welche externe Einflussfaktoren der biometrischen Daten beschreiben, wobei die Anpassungsparameter bei der Generierung des zweiten Zwischenergebnisses zur Anpassung der Zuordnung des Nutzers (1) zu einem emotionalen Zustand an die Einflussfaktoren verwendet werden, und/oder
wobei die Anwendungsdaten umfassen können:
• Positionsdaten des ersten Kommunikationssystems (100), welche durch ein Verfahren zur Positionsbestimmung durch einen Sensor (110) zur Bestimmung der Position des ersten Kommunikationssystems (100) erfasst werden, und/oder
• Anwendungsnutzungsdaten des Nutzers (1), und/oder
• Verbindungsdaten des ersten Kommunikationssystems (100) mit anderen Geräten und/oder
• Kalender- und/oder Uhrzeitdaten einer in dem ersten und/oder zweiten Kommunikationssystem (100/156) implementierten Uhr oder einer externen Uhr, deren Signal durch einen Sensor (110) des ersten und/oder zweiten Kommunikationssystems (100/156) empfangen wird und/oder
• Umgebungsdaten, welche mittels mindestens eines internen Umgebungssensors oder mittels mindestens eines externen Umgebungssensors erfasst werden, dessen Signal durch einen Sensor (110) des ersten und/oder zweiten Kommunikationssystems (156) empfangen wird.

11. Verfahren nach einem der vorherigen Ansprüche, wobei das Verfahren ferner ein Trainieren des Klassifikationsmoduls (200) umfasst, sofern die Authentifizierung erfolgreich war,
wobei das Trainieren des Klassifikationsmoduls (200) ein Hinzufügen der Daten (500) zu dem Vergleichsdatensatz und ein Entfernen von Daten (500), welche älter als ein Schwellenalter sind, umfasst, und/oder
wobei auf dem Kommunikationssystem mehrere Nutzer registriert sind und ein Klassifikationsergebnis (600) für jeden Nutzer generiert wird, wobei das Klassifikationsmodul (200) dazu konfiguriert ist einen Nutzer als einen der registrierten Nutzer zu identifizieren, wobei das Klassifikationsmodul (200) von dem Prozessor (130) des ersten Kommunikationssystems (100) ausgeführt wird,
wobei das Klassifikationsmodul (200) konfiguriert ist einen Nutzerwechsel anhand der Daten (500) zu erkennen,
wobei das Klassifikationsmodul (200) auf ein Erkennen einer grob- und/oder feinmotorischen Bewegung des Ab- und/oder Anlegens des ersten Kommunikationssystems (100) konfiguriert und auf ein Erkennen von nutzerspezifischen Bewegungsmustern in den Daten (500) trainiert ist.

12. Kommunikationssystem zur Authentifizierung eines Nutzers (1) eines ersten Kommunikationssystems (100), wobei das erste Kommunikationssystem (100) ein mobiles, tragbares Kommunikationssystem umfasst, welches eine Mehrzahl von Sensoren (110) zur Erfassung von Daten (500), ein Klassifikationsmodul (200) und einen Prozessor (130) aufweist,
wobei einer der Sensoren (110) ein Mikrofon zum Erfassen von stimmbasierten Daten (500) des Nutzers (1) umfasst,
wobei die erfassten Daten (500) ferner stimmunabhängige verhaltensbasierte Daten des Nutzers (1) umfassen,
wobei die verhaltensbasierten Daten ferner biometrische Daten des Nutzers (1) umfassen, wobei die biometrischen Daten ferner Daten einer grobmotorischen Bewegung umfassen,
wobei ein weiterer der Sensoren ein interner Bewegungssensor des Kommunikationssystems zur Erfassung der Daten der grobmotorischen Bewegung des Nutzers ist, welcher dazu konfiguriert ist, die grobmotorische Bewegung des Nutzers mittels einer Erfassung einer Bewegung des Kommunikationssystems zu erfassen, die durch die grobmotorische Bewegung des Nutzers verursacht wird, während der Nutzer das Kommunikationsgerät bei sich trägt,
wobei das Klassifikationsmodul (200) dazu trainiert ist, die grobmotorische Bewegung zu erkennen, wobei das Klassifikationsmodul (200) für ein Klassifizieren der Daten (500) konfiguriert ist, wobei das Klassifizieren ein Zuordnen der erfassten Daten (500) zu einer Identität eines registrierten Nutzers umfasst,
wobei das Klassifizieren ferner ein Zuordnen der erfassten Daten (500) zu einem emotionalen Zustand aus einer Mehrzahl von emotionalen Zuständen umfasst, wobei die erfassten stimmbasierten Daten eine Bestimmung des emotionalen Zustands des Nutzers ermöglichen, wobei die stimmbasierten Daten zumindest einen der folgenden Parameter der Stimme des Nutzers (1) umfassen: Klangfarbe, Rhythmus, Melodie und Lautstärke, wobei einer oder mehrere der Parameter der Stimme des Nutzers zum Zuordnen des emotionalen Zustands zu dem Nutzer verwendet werden,
wobei die Mehrzahl von emotionalen Zuständen eine Auswahl von für die Authentifizierung zulässiger emotionaler Zustände umfasst,
wobei das Klassifikationsmodul (200) durch den Prozessor (130) des ersten Kommunikationssystems (100) ausgeführt wird,
wobei das System die folgenden Schritte ausführt:
• Empfangen einer Authentifizierungsanfrage,
• Erfassen der Daten (500) durch den mindestens einen Sensor (110), wobei die Daten (500) sowohl stimmbasierte als auch stimmunabhängige Daten umfassen,
• Eingeben der Daten (500) in das Klassifikationsmodul (200) und Generieren eines ersten Zwischenergebnisses und eines zweiten Zwischenergebnisses aus den Daten (500) durch das Klassifikationsmodul (200),
• Generieren eines Klassifikationsergebnisses (600) unter Verwendung des ersten Zwischenergebnisses und des zweiten Zwischenergebnisses,
• Authentifizieren des Nutzers (1) unter Verwendung des Klassifikationsergebnisses (600),
• Generieren eines Authentifizierungssignals, wobei das Signal eine Information über das Ergebnis der Authentifizierung umfasst,
wobei das erste Zwischenergebnis eine Zuordnung des Nutzers (1) zu einer Identität eines registrierten Nutzers und die Angabe einer Zuordnungswahrscheinlichkeit umfasst, mit der dem Nutzer die Identität des registrierten Nutzers zugeordnet wird,
wobei das zweite Zwischenergebnis eine Zuordnung des Nutzers (1) zu einem emotionalen Zustand und die Angabe einer Zuordnungswahrscheinlichkeit umfasst, mit der dem Nutzer der emotionale Zustand zugeordnet wird,
wobei die Authentifizierung erfolgreich ist, wenn der Nutzer als ein berechtigter Nutzer identifiziert wird und dem Nutzer ein zulässiger emotionaler Zustand aus der Auswahl von zulässigen emotionalen Zuständen zugeordnet wird.

13. Kommunikationssystem nach Anspruch 14, wobei das erste Kommunikationssystem (100) dazu konfiguriert ist mittels Sprachsteuerung durch den Nutzer (1) gesteuert zu werden.

14. Kommunikationssystem nach einem der Ansprüche 19 bis 20, wobei das erste Kommunikationssystem (100) ein Programm umfasst, wobei das Programm die Authentifizierungsanfrage sendet, um den Nutzer gegenüber dem ersten Kommunikationssystem (100) zu authentifizieren, wobei das erste Kommunikationssystem (100) dem Nutzer den Zugriff auf das Programm in Abhängigkeit von dem Authentifizierungssignal ermöglicht oder
wobei das erste Kommunikationssystem (100) mit einem zweiten Kommunikationssystem (156) kommunikativ verbunden ist, wobei das zweite Kommunikationssystem (156) die Authentifizierungsanfrage sendet, um den Nutzer gegenüber dem zweiten Kommunikationssystem (156) zu authentifizieren.

15. Kommunikationssystem nach einem der Ansprüche 19 bis 23, wobei das erste Kommunikationssystem (100) ferner einen internen Speicher (120) aufweist, wobei das Erfassen der Daten (500), das Eingeben der Daten (500) in das Klassifikationsmodul (200) und das Generieren des ersten Zwischenergebnisses wiederholt ausgeführt werden,
wobei das erste und das zweite Zwischenergebnis in dem Speicher (120) des ersten Kommunikationssystems (100) gespeichert werden,
wobei auf das Empfangen der Authentifizierungsanfrage hin das erste und das zweite Zwischenergebnis aus dem Speicher (120) des ersten Kommunikationssystems (100) ausgelesen werden.

## Claims

1. Method for authenticating a user (1) of a first communication system (100), wherein the first communication system (100) comprises a mobile, portable communication system which comprises a plurality of sensors (110) for capturing data (500), a classification module (200), and a processor (130),
wherein one of the sensors (110) comprises a microphone for capturing voice-based data (500) for the user (1),
wherein the captured data (500) further comprises voice-independent, behavior-based data for the user (1),
wherein the behavior-based data further comprises biometric data for the user (1), wherein the biometric data further comprises data for a gross-motor movement,
wherein another of the sensors is an internal motion sensor of the communication system for capturing the data for the gross-motor movement of the user, which sensor is configured to capture the gross-motor movement of the user by capturing a movement of the communication system caused by the gross-motor movement of the user while the user is carrying the communication device with them,
wherein the classification module (200) is trained to detect the gross-motor movement, wherein the classification module (200) is configured for classification of the data (500), wherein the classification includes assigning the captured data (500) to an identity of a registered user,
wherein the classification further includes assigning the captured data (500) to one emotional state of a plurality of emotional states, wherein the captured, voice-based data makes it possible to determine the emotional state of the user, wherein the voice-based data includes at least one of the following parameters of the voice of the user (1): timbre, rhythm, melody, and volume, wherein one or more of the parameters of the voice of the user are used for assigning the emotional state to the user,
wherein the plurality of emotional states includes a selection of emotional states permissible for the authentication,
wherein the classification module (200) is executed by the processor (130) of the first communication system (100),
wherein the method comprises the following steps:
• receiving an authentication request,
• capturing the data (500) by means of the sensors (110), wherein the data (500) include both voice-based and voice-independent data,
• inputting the data (500) into the classification module (200) and generating a first intermediate result and a second intermediate result from the data (500) by means of the classification module (200),
• generating a classification result (600) using the first intermediate result and the second intermediate result,
• authenticating the user (1) using the classification result (600),
• generating an authentication signal, wherein the signal includes information regarding the result of the authentication,
wherein the first intermediate result includes assigning the user (1) to an identity of a registered user and stating an assignment probability with which the identity of the registered user is assigned to the user,
wherein the second intermediate result includes assigning the user (1) to an emotional state and stating an assignment probability with which the emotional state is assigned to the user,
wherein the authentication is successful when the user is identified as an authorized user and a permissible emotional state from the selection of permissible emotional states is assigned to the user.

2. Method according to claim 1, wherein the first communication system (100) is configured to be controlled by the user (1) by means of voice control.

3. Method according to any of claims 1 to 2, wherein the first communication system (100) comprises a program, wherein the program sends the authentication request in order to authenticate the user to the first communication system (100), wherein the first communication system (100) allows the user access to the program on the basis of the authentication signal.

4. Method according to any of claims 1 to 2, wherein the first communication system (100) is communicatively connected to a second communication system (156), wherein the second communication system (156) sends the authentication request in order to authenticate the user to the second communication system (156).

5. Method according to claim 4, wherein the first intermediate result and the second intermediate result are sent to the second communication system (156), wherein the second communication system (156) captures data (500) for the user (1) and generates a third intermediate result from the data (500) captured by the second communication system (156), wherein the second communication system (156) generates the classification result (600), wherein the third intermediate result is further used for the generation of the classification result (600).

6. Method according to any of the preceding claims, wherein the first communication system (100) further comprises an internal memory (120), wherein the capturing of the data (500), the input of the data (500) into the classification module (200), and the generation of the first intermediate result are performed repeatedly,
wherein the first and the second intermediate result are stored in the memory (120) of the first communication system (100),
wherein, when the authentication request is received, the first and the second intermediate result are read out from the memory (120) of the first communication system (100), and/or
wherein the biometric data further comprises data for a fine-motor movement,
wherein the classification module (200) is trained to detect a fine-motor movement.

7. Method according to any of the preceding claims, wherein assigning the user (1) to an identity of an authorized user (1) and assigning the user (1) to an emotional state each comprise the following steps:
• generating comparative parameters from a comparative data set,
• generating classification parameters (520) from the data (500),
• comparing the comparative parameters with the classification parameters (520) and
• calculating the assignment probability of each assignment from a result of the comparison,
wherein the user (1) is assigned to an identity of a registered user owing to the assignment probability of assigning the user (1) to an identity of a registered user,
wherein the user (1) is assigned to an emotional state owing to the assignment probability of assigning the user (1) to an emotional state.

8. Method according to claim 7, wherein the individual classification parameters (520) are each provided with a weighting factor when calculating the assignment probability, wherein the weighting factors are assigned to the respective classification parameters (520).

9. Method according to any of the preceding claims, wherein the plurality of emotional states are defined by parameter ranges which have been calculated from data (500) for a user cohort, and/or
wherein the first communication system (100) comprises applications, wherein the data (500) further comprise application data for the user (1).

10. Method according to claim 9, wherein adaptation parameters, which describe external influencing factors of the biometric data, are determined from the application data, wherein the adaptation parameters are used when generating the second intermediate result to adapt the assignment of the user (1) to an emotional state to the influencing factors, and/or
wherein the application data can comprise:
• position data of the first communication system (100) which are captured by a method for position determination by means of a sensor (110) for determining the position of the first communication system (100), and/or
• application usage data for the user (1), and/or
• connection data for the first communication system (100) to other devices and/or
• calendar and/or time data from a clock implemented in the first and/or second communication system (100/156) or an external clock, the signal from which is received by a sensor (110) of the first and/or second communication system (100/156) and/or
• environmental data, which are captured by means of at least one internal environmental sensor or by means of at least one external environmental sensor, the signal from which is received by a sensor (110) of the first and/or second communication system (156).

11. Method according to any of the preceding claims, wherein the method further comprises training the classification module (200) provided that the authentication was successful,
wherein training the classification module (200) includes adding the data (500) to the comparative data set and removing data (500) which is older than a threshold age, and/or
wherein a plurality of users are registered on the communication system and a classification result (600) is generated for each user, wherein the classification module (200) is configured to identify a user as one of the registered users, wherein the classification module (200) is executed by the processor (130) of the first communication system (100),
wherein the classification module (200) is configured to detect a change in user on the basis of the data (500),
wherein the classification module (200) is configured to detect a gross-motor and/or fine-motor movement of the first communication system (100) being picked up and/or put down and is trained to detect user-specific movement patterns in the data (500).

12. Communication system for authenticating a user (1) of a first communication system (100), wherein the first communication system (100) comprises a mobile, portable communication system which comprises a plurality of sensors (110) for capturing data (500), a classification module (200), and a processor (130),
wherein one of the sensors (110) comprises a microphone for capturing voice-based data (500) for the user (1),
wherein the captured data (500) further comprises voice-independent, behavior-based data for the user (1),
wherein the behavior-based data further comprises biometric data for the user (1), wherein the biometric data further comprises data for a gross-motor movement,
wherein another of the sensors is an internal motion sensor of the communication system for capturing the data for the gross-motor movement of the user, which sensor is configured to capture the gross-motor movement of the user by capturing a movement of the communication system caused by the gross-motor movement of the user while the user is carrying the communication device with them,
wherein the classification module (200) is trained to detect the gross-motor movement,
wherein the classification module (200) is configured for classification of the data (500), wherein the classification includes assigning the captured data (500) to an identity of a registered user,
wherein the classification further includes assigning the captured data (500) to one emotional state of a plurality of emotional states, wherein the captured, voice-based data makes it possible to determine the emotional state of the user, wherein the voice-based data includes at least one of the following parameters of the voice of the user (1): timbre, rhythm, melody, and volume, wherein one or more of the parameters of the voice of the user are used for assigning the emotional state to the user,
wherein the plurality of emotional states includes a selection of emotional states permissible for the authentication,
wherein the classification module (200) is executed by the processor (130) of the first communication system (100),
wherein the system performs the following steps:
• receiving an authentication request,
• capturing the data (500) by means of the at least one sensor (110), wherein the data (500) include both voice-based and voice-independent data,
• inputting the data (500) into the classification module (200) and generating a first intermediate result and a second intermediate result from the data (500) by means of the classification module (200),
• generating a classification result (600) using the first intermediate result and the second intermediate result,
• authenticating the user (1) using the classification result (600),
• generating an authentication signal, wherein the signal includes information regarding the result of the authentication,
wherein the first intermediate result includes assigning the user (1) to an identity of a registered user and stating an assignment probability with which the identity of the registered user is assigned to the user,
wherein the second intermediate result includes assigning the user (1) to an emotional state and stating an assignment probability with which the emotional state is assigned to the user, wherein the authentication is successful when the user is identified as an authorized user and a permissible emotional state from the selection of permissible emotional states is assigned to the user.

13. Communication system according to claim 14, wherein the first communication system (100) is configured to be controlled by the user (1) by means of voice control.

14. Communication system according to any of claims 19 to 20, wherein the first communication system (100) comprises a program, wherein the program sends the authentication request in order to authenticate the user to the first communication system (100), wherein the first communication system (100) allows the user access to the program on the basis of the authentication signal or
wherein the first communication system (100) is communicatively connected to a second communication system (156), wherein the second communication system (156) sends the authentication request in order to authenticate the user to the second communication system (156).

15. Communication system according to any of claims 19 to 23, wherein the first communication system (100) further comprises an internal memory (120), wherein the capturing of the data (500), the input of the data (500) into the classification module (200), and the generation of the first intermediate result are performed repeatedly,
wherein the first and the second intermediate result are stored in the memory (120) of the first communication system (100),
wherein, when the authentication request is received, the first and the second intermediate result are read out from the memory (120) of the first communication system (100).

## Revendications

1. Procédé d'authentification d'un utilisateur (1) d'un premier système de communication (100), dans lequel le premier système de communication (100) comprend un système de communication mobile portable, lequel présente une multiplicité de capteurs (110) permettant la saisie de données (500), un module de classification (200) et un processeur (130),
dans lequel un ces capteurs (110) comprend un microphone permettant la saisie de données vocales (500) de l'utilisateur (1),
dans lequel les données (500) saisies comprennent en outre des données dépendant de l'humeur basées sur le comportement de l'utilisateur (1),
dans lequel les données basées sur le comportement comprennent en outre des données biométriques de l'utilisateur (1), où les données biométriques comprennent en outre des données d'un mouvement de motricité grossière,
dans lequel un autre parmi les capteurs est un capteur de mouvements interne du système de communication permettant la saisie des données du mouvement de motricité grossière de l'utilisateur, lequel est conçu pour détecter le mouvement de motricité grossière de l'utilisateur au moyen de la détection d'un mouvement du système de communication qui est occasionné par le mouvement de motricité grossière de l'utilisateur pendant que l'utilisateur transporte l'appareil de communication sur lui,
dans lequel le module de classification (200) est entraîné pour reconnaitre le mouvement de motricité grossière, où le module de classification (200) est conçu pour une classification des données (500), où la classification comprend une association des données (500) saisies avec une identité d'un utilisateur enregistré,
dans lequel la classification comprend en outre une association des données (500) saisies avec un état émotionnel parmi une multiplicité d'états émotionnels, où les données vocales saisies permettent une détermination de l'état émotionnel de l'utilisateur, où les données vocales comprennent au moins un des paramètres suivants de la voix de l'utilisateur (1) : le timbre, le rythme, la mélodie et le volume, où un ou plusieurs des paramètres de la voix de l'utilisateur sont employés pour l'association de l'état émotionnel à l'utilisateur,
dans lequel la multiplicité des états émotionnels comprend une sélection d'états émotionnels possibles pour l'authentification,
dans lequel le module de classification (200) est effectué par le processeur (130) du premier système de communication (100),
où le procédé comprend les étapes suivantes :
• la réception d'une demande d'authentification,
• la saisie des données (500) par les capteurs (110), où les données (500) comprennent à la fois des donnée vocales et des données dépendantes de l'humeur,
• l'entrée des données (500) dans le module de classification (200) et la génération d'un premier résultat intermédiaire et d'un deuxième résultat intermédiaire à partir des données (500) par le module de classification (200),
• la génération d'un résultat de classification (600) moyennant l'emploi du premier résultat intermédiaire et du deuxième résultat intermédiaire,
• l'authentification de l'utilisateur (1) moyennant l'emploi du résultat de classification (600),
• la génération d'un signal d'authentification, où le signal comprend une information concernant le résultat de l'authentification,
dans lequel le premier résultat intermédiaire comprend une association de l'utilisateur (1) à une identité d'un utilisateur enregistré et l'indication d'une probabilité d'association avec laquelle l'identité de l'utilisateur enregistré est associée à l'utilisateur,
dans lequel le deuxième résultat intermédiaire comprend une association de l'utilisateur (1) à un état émotionnel et l'indication d'une probabilité d'association avec laquelle l'état émotionnel est associé à l'utilisateur,
dans lequel l'authentification est réussie lorsque l'utilisateur est identifié en tant qu'utilisateur autorisé et qu'un état émotionnel possible parmi la sélection d'états émotionnels possibles est associé à l'utilisateur.

2. Procédé selon la revendication 1, dans lequel le premier système de communication (100) est conçu pour être commandé au moyen d'une commande vocale par l'utilisateur (1).

3. Procédé selon l'une des revendications 1 à 2, dans lequel le premier système de communication (100) comprend un programme, où le programme envoie la demande d'authentification afin d'authentifier l'utilisateur vis-à-vis du premier système de communication (100), où le premier système de communication (100) permet à l'utilisateur l'accès au programme en fonction du signal d'authentification.

4. Procédé selon l'une des revendications 1 à 2, dans lequel le premier système de communication (100) est relié de manière communicative avec un deuxième système de communication (156), où le deuxième système de communication (156) envoie la demande d'authentification afin d'authentifier l'utilisateur vis-à-vis du deuxième système de communication (156).

5. Procédé selon la revendication 4, dans lequel le premier résultat intermédiaire et le deuxième résultat intermédiaire sont envoyés au deuxième système de communication (156), où le deuxième système de communication (156) saisit des données (500) de l'utilisateur (1) et génère un troisième résultat intermédiaire à partir des données (500) saisies par le deuxième système de communication (156), où le deuxième système de communication (156) génère le résultat de classification (600), où en outre le troisième résultat intermédiaire est employé pour la génération du résultat de classification (600).

6. Procédé selon l'une des revendications précédentes, dans lequel le premier système de communication (100) présente en outre une mémoire (120) interne, dans lequel la détection des données (500), la saisie des données (500) dans le module de classification (200) et la génération du premier résultat intermédiaire sont exécutées de manière répétée,
dans lequel les premier et deuxième résultats intermédiaires sont enregistrés dans la mémoire (120) du premier système de communication (100),
dans lequel, suite à la réception de la demande d'authentification, les premier et deuxième résultats intermédiaires sont lus à partir de la mémoire (120) du premier système de communication (100), et/ou
dans lequel les données biométriques comprennent en outre des données d'un mouvement de motricité fine,
dans lequel le module de classification (200) est entraîné pour reconnaître un mouvement de motricité fine.

7. Procédé selon l'une des revendications précédentes, dans lequel l'association de l'utilisateur (1) à une identité d'un utilisateur (1) autorisé et l'association de l'utilisateur (1) à un état émotionnel comprennent respectivement les étapes suivantes :
• la génération de paramètres de comparaison à partir d'un ensemble de données de comparaison,
• la génération de paramètres de classification (520) à partir des données (500),
• la comparaison des paramètres de comparaison avec les paramètres de classification (520) et
• le calcul d'une probabilité d'association de l'association respective à partir d'un résultat de la comparaison,
dans lequel l'association de l'utilisateur (1) à une identité d'un utilisateur enregistré a lieu en raison de la probabilité d'association de l'association de l'utilisateur (1) à une identité d'un utilisateur enregistré,
dans lequel l'association de l'utilisateur (1) à un état émotionnel a lieu en raison de la probabilité d'association de l'association de l'utilisateur (1) à un état émotionnel.

8. Procédé selon la revendication 7, dans lequel les paramètres de classification (520) individuels sont munis respectivement d'un facteur de pondération lors du calcul de la probabilité d'association, où les facteurs de pondération sont associés au paramètre de classification (520) respectif.

9. Procédé selon l'une des revendications précédentes, dans lequel la multiplicité des états émotionnels est définie par des domaines de paramètres, lesquels ont été calculés à partir de données (500) d'une cohorte d'utilisateurs, et/ou
dans lequel le premier système de communication (100) comprend des applications, où les données (500) comprennent en outre des données d'application de l'utilisateur (1).

10. Procédé selon la revendication 9, dans lequel des paramètres d'adaptation, lesquels décrivent des facteurs d'influence extérieurs des données biométriques, sont déterminés à partir des données d'application, où les paramètres d'adaptation sont employés aux facteurs d'influence lors de la génération du deuxième résultat intermédiaire pour l'adaptation de l'association de l'utilisateur (1) à un état émotionnel, et/ou
dans lequel les données d'adaptation peuvent comprendre :
• des données de position du premier système de communication (100), lesquelles sont détectées par un procédé de détermination de position par un capteur (110) pour la détermination de la position du premier système de communication (100), et/ou
• des données d'utilisation d'applications de l'utilisateur (1), et/ou
• des données de connexion du premier système de communication (100) avec d'autres appareils, et/ou
• des données calendaires et/ou horaires d'une horloge mise en oeuvre dans le premier et/ou dans le deuxième système de communication (100/156) ou d'une horloge externe dont le signal est reçu par un capteur (110) du premier et/ou du deuxième système de communication (100/156), et/ou
• des données environnementales, lesquelles sont détectées au moyen d'au moins un capteur environnemental interne ou au moyen d'au moins un capteur environnemental externe dont le signal est reçu par un capteur (110) du premier et/ou du deuxième système de communication (156).

11. Procédé selon l'une des revendications précédentes, le procédé comprenant en outre un entrainement du module de classification (200) dans la mesure où l'authentification a été réussie,
dans lequel l'entrainement du module de classification (200) comprend l'ajout des données (500) à l'ensemble de données de comparaison et un retrait de données (500), lesquelles sont plus anciennes qu'un âge limite, et/ou
dans lequel plusieurs utilisateurs sont enregistrés sur le système de communication et un résultat de classification (600) est généré pour chaque utilisateur, où le module de classification (200) est conçu pour identifier un utilisateur en tant qu'utilisateur enregistré, où le module de classification (200) est exécuté par le processeur (130) du premier système de communication (100),
dans lequel le module de classification (200) est conçu pour reconnaître un échange d'utilisateurs à l'aide des données (500),
dans lequel le module de classification (200) est conçu pour reconnaître un mouvement de motricité grossière et/ou fine de la désactivation et/ou de l'activation du premier système de communication (100) et est entrainé pour une reconnaissance de modèles de déplacement spécifiques à l'utilisateur dans les données (500).

12. Système de communication permettant l'authentification d'un utilisateur (1) d'un premier système de communication (100), où le premier système de communication (100) comprend un système de communication mobile portable, lequel présente une multiplicité de capteurs (110) permettant la saisie de données (500), un module de classification (200) et un processeur (130),
dans lequel un ces capteurs (110) comprend un microphone permettant la saisie de données vocales (500) de l'utilisateur (1),
dans lequel les données (500) saisies comprennent en outre des données dépendant de l'humeur basées sur le comportement de l'utilisateur (1),
dans lequel les données basées sur le comportement comprennent en outre des données biométriques de l'utilisateur (1), où les données biométriques comprennent en outre des données d'un mouvement de motricité grossière,
dans lequel un autre parmi les capteurs est un capteur de mouvements interne du système de communication permettant la saisie des données du mouvement de motricité grossière de l'utilisateur, lequel est conçu pour détecter le mouvement de motricité grossière de l'utilisateur au moyen de la détection d'un mouvement du système de communication qui est occasionné par le mouvement de motricité grossière de l'utilisateur pendant que l'utilisateur transporte l'appareil de communication sur lui,
dans lequel le module de classification (200) est entraîné pour reconnaitre le mouvement de motricité grossière, où le module de classification (200) est conçu pour une classification des données (500), où la classification comprend une association des données (500) saisies avec une identité d'un utilisateur enregistré,
dans lequel le classement comprend en outre une association des données (500) saisies avec un état émotionnel parmi une multiplicité d'états émotionnels, où les données vocales saisies permettent une détermination de l'état émotionnel de l'utilisateur, où les données vocales comprennent au moins un des paramètres suivants de la voix de l'utilisateur (1) : le timbre, le rythme, la mélodie et le volume, où un ou plusieurs des paramètres de la voix de l'utilisateur sont employés pour l'association de l'état émotionnel à l'utilisateur,
dans lequel la multiplicité des états émotionnels comprend une sélection d'états émotionnels possibles pour l'authentification,
dans lequel le module de classification (200) est effectué par le processeur (130) du premier système de communication (100),
où le système exécute les étapes suivantes :
• la réception d'une demande d'authentification,
• la saisie des données (500) par l'au moins un capteur (110), où les données (500) comprennent à la fois des données vocales mais aussi des données dépendantes de l'humeur,
• l'entrée des données (500) dans le module de classification (200) et la génération d'un premier résultat intermédiaire et d'un deuxième résultat intermédiaire à partir des données (500) par le module de classification (200),
• la génération d'un résultat de classification (600) moyennant l'emploi du premier résultat intermédiaire et du deuxième résultat intermédiaire,
• l'authentification de l'utilisateur (1) moyennant l'emploi du résultat de classification (600),
• la génération d'un signal d'authentification, où le signal comprend une information concernant le résultat de l'authentification,
dans lequel le premier résultat intermédiaire comprend une association de l'utilisateur (1) à une identité d'un utilisateur enregistré et l'indication d'une probabilité d'association avec laquelle l'identité de l'utilisateur enregistré est associée à l'utilisateur,
dans lequel le deuxième résultat intermédiaire comprend une association de l'utilisateur (1) à un état émotionnel et l'indication d'une probabilité d'association avec laquelle l'état émotionnel est associé à l'utilisateur,
dans lequel l'authentification est réussie lorsque l'utilisateur est identifié en tant qu'utilisateur autorisé et qu'un état émotionnel possible parmi la sélection d'états émotionnels possibles est associé à l'utilisateur.

13. Système de communication selon la revendication 14, dans lequel le premier système de communication (100) est conçu pour être commandé au moyen d'une commande vocale par l'utilisateur (1).

14. Système de communication selon l'une des revendications 19 à 20, dans lequel le premier système de communication (100) comprend un programme, où le programme envoie la demande d'authentification afin d'authentifier l'utilisateur vis-à-vis du premier système de communication (100), où le premier système de communication (100) permet à l'utilisateur l'accès au programme en fonction du signal d'authentification, ou dans lequel le premier système de communication (100) est relié de manière communicative avec un deuxième système de communication (156), où le deuxième système de communication (156) envoie la demande d'authentification afin d'authentifier l'utilisateur vis-à-vis du deuxième système de communication (156).

15. Système de communication selon l'une des revendications 19 à 23, dans lequel le premier système de communication (100) présente en outre une mémoire (120) interne, dans lequel la détection des données (500), la saisie des données (500) dans le module de classification (200) et la génération du premier résultat intermédiaire sont exécutées de manière répétée,
dans lequel les premier et deuxième résultats intermédiaires sont enregistrés dans la mémoire (120) du premier système de communication (100),
dans lequel, suite à la réception de la demande d'authentification, les premier et deuxième résultats intermédiaires sont lus à partir de la mémoire (120) du premier système de communication (100).
